# EUROPEAN PATENT SPECIFICATION

(11) **EP 3 635 950 B1**
(45) Date of publication and mention of the grant of the patent: **21.09.2022**
(21) Application number: 18743876.7
(22) Date of filing: 28.06.2018
(51) Int. Cl.: H04N 7/18

(54) **IMAGING DEVICE, CAMERA-EQUIPPED DRONE, AND MODE CONTROL METHOD, AND PROGRAM**
BILDGEBUNGSVORRICHTUNG, MIT KAMERA AUSGESTATTETE DROHNE UND MODUSSTEUERUNGSVERFAHREN UND PROGRAMM
DISPOSITIF D'IMAGERIE, DRONE ÉQUIPÉ DE CAMÉRA, PROCÉDÉ DE COMMANDE DE MODE ET PROGRAMME

(30) Priority: 05.07.2017 JP 2017131674
(43) Date of publication of application: 15.04.2020
(60) Divisional application: 22163015.5
(73) Proprietor: Sony Group Corporation, Tokyo 108-0075 (JP)
(72) Inventor: HARADA, Takeshi, Tokyo 108-0075 (JP); ODA, Ryunosuke, Tokyo 108-0075 (JP)
(74) Representative: D Young & Co LLP
(86) International application number: PCT/JP2018/024525
(87) International publication number: WO 2019/009171

(56) References cited:
- EP-A1- 2 099 197
- JP-A- 2007 148 802

## Description

### Technical Field

The present disclosure relates to an imaging device imaging device, such as a camera or the like, for use on-board a reconnaissance vehicle, such as a drone or remote controlled vehicle, a camera-equipped drone, a method, and a program. More particularly, the present disclosure relates to an imaging device, a camera-equipped drone, a mode control method, and a program which are capable of performing switching between an image photographing mode and an image transfer mode.

### Background Art

In recent years, the use of reconnaissance vehicles such as drones which are compact air vehicles which performs remote controlled flight or autonomous flight based on a GPS or the like has been rapidly increasing.

For example, a drone is equipped with a camera and used for a process of photographing the landscape on the ground from the sky or the like.

In addition, recently, aerial images using a drone are used even in a terrain checking process, a surveying process, construction sites, and the like.

For example, examples of a type of drone include a type in which flight control is performed in accordance with an instruction from a remote controller on the ground and a type in which position information of a GPS or the like is received, and autonomous flight is performed.

In both cases, a controller (control unit) of a drone main body receives an instruction signal of a remote controller or a GPS signal, and flight is performed.

For example, control of a photographing start or stop process, a photographing setting, and the like of the camera mounted in the drone is executed in accordance with a command output from the controller of the drone main body to the camera side.

For example, the instruction of the remote controller on the ground is received by the controller of the drone main body, and the controller of the drone main body outputs a photographing control command to the camera on the basis of the instruction.

In addition, in the case of the autonomous flight type drone, the photographing control command is output to the camera in accordance with a program stored in a memory in the controller of the drone main body.

For example, in a case where a photographing position recorded in a program coincides with a current position based on the GPS signal, a photographing start command is output to the camera.

The controller of the drone main body and the camera have, for example, a universal serial bus (USB) connection configuration.

For example, the controller of the drone main body outputs various photographing control commands to the camera in accordance with a picture transfer protocol (PTP) which is a USB communication standard (communication protocol).

Furthermore, the controller of the drone main body performs wireless communication with a communication device of a user who is a drone administrator on the ground. For example, the controller of the drone main body gives a notification indicating a state of the drone or the like to the communication device of the user.

In order for the user to acquire photographed images of the camera mounted in the drone, a method in which after the photographing is finished, the drone returns to a base station on the ground, a memory card such as an SD card which is an image storage unit of the camera is removed and then loaded onto a PC or the like, and the photographed images are checked is common.

Alternatively, a process is performed in which the camera is removed from the drone main body, the camera is connected to a host device such as a PC, and the host device reads images stored in the storage unit of the camera.

However, in both cases, the above process is to acquire and check the photographed images after the drone returns to the ground, and for example, it is difficult to check whether or not a desired image has been photographed at the time of image photographing.

As described above, when the process of acquiring and checking the photographed images is performed after the drone returns to the ground, in a case where a desired image fails to be photographed, there is a problem in that it is necessary to perform rephotographing, and loss of time and cost increase are caused.

It is technically possible to transfer an image photographed by the camera from the camera to the drone main body controller and further transmit the image from the drone main body controller to the communication device such as the PC on the ground.

However, if an image transfer is executed using a PTP communication protocol while performing photographing control according to PTP communication which is the USB communication standard between the drone main body controller and the camera, an image transfer time from the camera to the drone main body controller increases, and the photographing control command is unable to be issued during that time, and thus there occurs a problem in that photographing control is obstructed.

For example, a configuration in which two protocols of the PTP and the mass storage class (MSC) are switched and used is disclosed in PTL 1 (JP 2007-148802A).

The configuration disclosed in PTL 1 is a configuration in which the PC and the camera are connected, and a predetermined message is transmitted from the PC side to the camera to switch the protocol.

In order to implement the configuration disclosed in PTL 1, it is necessary for the drone main body controller side to transmit a message for protocol switching to the camera, and it is necessary to change a specification (program) of the drone main body controller side.

### Citation List

### Patent Literature

PTL 1: JP 2007-148802A

### Summary

### Technical Problem

For example, the present disclosure was made in light of the above problems, and it is desirable to provide an imaging device, a camera-equipped drone, a mode control method, and a program which are capable of enabling the camera to autonomously perform switching between the image photographing mode and the image transfer mode and performing efficient image transfer without changing the specification (program) of the drone main body controller side.

### Solution to Problem

Various aspects and features of the present technique are defined in the appended claims.

An imaging device, such as a camera or the like, for use on-board a reconnaissance vehicle, such as a drone or remote controlled vehicle, comprises an image capturing unit (32, 33, 34) configured when activated to capture photographic or video images of a photographic area, and a control unit (31). The control unit is configured to communicate via a serial communications interface, such as a USB interface, with a control body unit of the reconnaissance vehicle, and to operate in an image photographing mode in which the control unit (31) receives control information from the control body unit of the reconnaissance vehicle via the serial communications interface and in an image transfer mode in which the control unit (31) transfers the photographic or video images to the control body unit of the reconnaissance vehicle via the serial communications interface in accordance with a data transfer protocol. The control unit (31) is configured in response to detecting mode switching conditions to switch autonomously from the image photographing mode to the image transfer mode to transfer one or more photographic or video images to the control body unit of the reconnaissance vehicle.

Accordingly only a single serial communications interface, such as a USB interface, need by provided both to control the imaging device and to transfer the captured images from the imaging device in the image transfer mode using a data transfer protocol, such as a mass storage class, MTC, compatible type data communications protocol.

For example, a mass storage class (MSC) which is a USB data transfer standard is used, it is possible to transfer images from the camera to the drone main body controller at a high speed.

The image photographing mode in which the control unit (31) receives control information from the control body unit of the reconnaissance vehicle via the serial communications interface includes communicating the control information in accordance with a PTP (picture transfer protocol) communications protocol. Although the PTP communications protocol includes a facility for communicating captured images as well as controlling the imaging device (camera), the transfer of the images is relatively slow and unsuitable for transferring images represented as a large volume of data such as high resolution images or video. Furthermore both control of the imaging device and the transfer of the captured images is arranged via the same interface, which is a serial communications interface, USB.

Accordingly, providing a facility in which the imaging device is arranged in cooperation with a reconnaissance vehicle such as a drone to switch to a mode which performs an image transfer according to an MTC-type protocol, then the images are transferred to a control body unit of the drone for storage or onward communication more quickly and efficiently, which may also reduce power consumption.

Various further aspects and features of the present technique are defined in the appended claims and include a reconnaissance vehicle a method of operating an imaging device and a computer program.

Still other objects, features, and advantages of the present disclosure will become apparent from a detailed description based on embodiments of the present disclosure to be described later or the appended drawings. Further, in this specification, a "system" is a logical aggregate configuration of a plurality of devices and not limited to a configuration in which devices of respective configurations are in the same housing.

### Advantageous Effects of Invention

According to a configuration of an embodiment of the present disclosure, a configuration in which switching between an image photographing mode and an image transfer mode is performed in accordance with whether or not a mode switching condition is satisfied, and communication according to a different communication protocol is performed in each mode is implemented.

Specifically, for example, a control unit which executes mode switching between the image photographing mode and the image transfer mode is provided, and the control unit determines whether or not a prespecified mode switching condition is satisfied and executes a process of performing switching from the image photographing mode to the image transfer mode in a case where the mode switching condition is satisfied. In the image photographing mode, communication according to a PTP is executed with a connected drone main body control device, and in the image transfer mode, communication according to a mass storage class (MSC) is executed with the connected drone main body control device.

With the present configuration, the configuration in which switching between the image photographing mode and the image transfer mode is performed in accordance with whether or not the mode switching condition is satisfied, and the communication according to the different communication protocol is performed in each mode is implemented.

Further, the effects described in this specification are merely examples and not limited, and additional effects may be obtained.

### Brief Description of Drawings

[fig. 1] Fig. 1 is a diagram illustrating an example of flight of a camera-equipped drone and an image photographing process.
[fig.2]Fig. 2 is a diagram illustrating an example of flight of a camera-equipped drone and an image photographing process.
[fig.3]Fig. 3 is a diagram illustrating an example of image photographing and transfer sequence of a camera-equipped drone.
[fig.4]Fig. 4 is a diagram illustrating a configuration example of a drone main body control device.
[fig.5]Fig. 5 is a diagram illustrating a configuration example of a camera.
[fig.6]Fig. 6 is a diagram illustrating a communication process example between a drone main body control device and a camera.
[fig.7]Fig. 7 is a flowchart illustrating a processing sequence of a drone main body control device and a camera of a camera-equipped drone.
[fig.8]Fig. 8 is a flowchart illustrating a processing sequence of a camera of a camera-equipped drone.
[fig.9]Fig. 9 is a diagram illustrating an example of an image photographing process of a camera-equipped drone.
[fig. 10] Fig. 10 is a flowchart illustrating a processing sequence of a camera of a camera-equipped drone.
[fig. 11] Fig. 11 is a diagram for describing a correspondence relation between a condition of a mode switching process of a camera of a camera-equipped drone and a process to be executed.
[fig.12] Fig. 12 is a flowchart illustrating a processing sequence of a camera of a camera-equipped drone.
[fig.13] Fig. 13 is a diagram for describing a correspondence relation between a condition of a mode switching process of a camera of a camera-equipped drone and a process to be executed.
[fig.14] Fig. 14 is a diagram illustrating an example of an image photographing process of a camera-equipped drone.
[fig.15] Fig. 15 is a flowchart illustrating a processing sequence of a camera of a camera-equipped drone.
[fig.16] Fig. 16 is a diagram for describing a correspondence relation between a condition of a mode switching process of a camera of a camera-equipped drone and a process to be executed.

### Description of Embodiments

An imaging device, a camera-equipped drone, a mode control method, and a program of the present disclosure will be described below in detail with reference to the appended drawings. Further, the description will proceed in accordance with the following items.
1. Configuration example of system which process of present disclosure can be applied
2. Configuration example of drone main body control device and camera
3. Specific example of switching process between image photographing mode and image transfer mode
4. Setting of mode switching condition according to various photographing situations and specific example of mode switching process
   4-1. (First process example) process example in which moving speed and photographing process stop period are used as mode switching determination condition
   4-2. (Second process example) process example in which current position and photographing process stop period are used as mode switching determination condition
   4-3. (Third process example) process example in which only moving switching speed is used as mode switching determination condition
5. Conclusion of configuration of present disclosure

### <1. Configuration example of system which process of present disclosure can be applied>

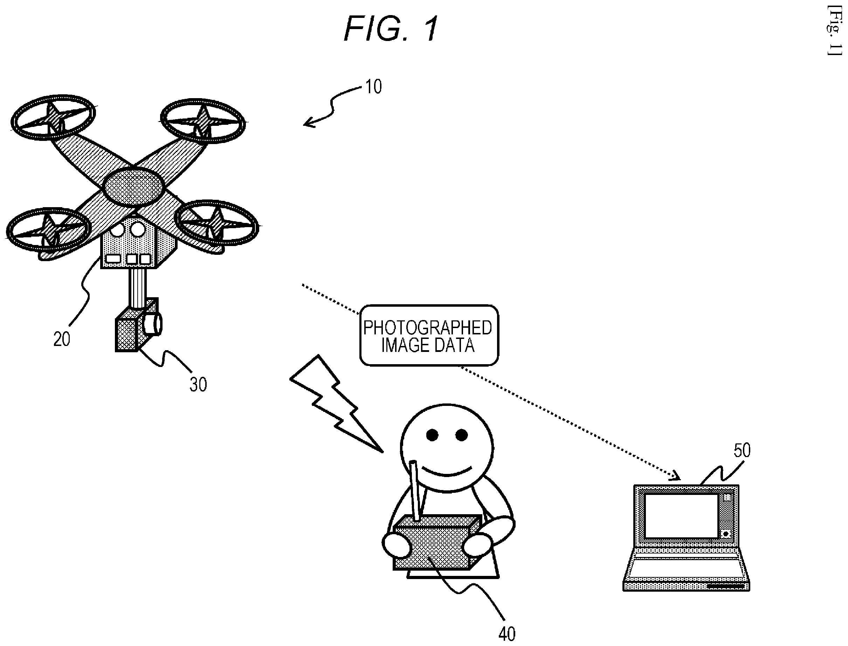

First, a configuration example of a system to which a process of the present disclosure can be applied will be described with reference to Fig. 1.

Fig. 1 is a diagram illustrating an example of a system configuration to which the process of the present disclosure can be applied.

Fig. 1 illustrates a camera-equipped drone 10. The camera-equipped drone 10 includes a drone main body control device (controller) 20 and a camera 30. The drone main body control device 20 and the camera 30 are connected via a USB. In the following description, the term camera will be used for simplicity, although it will be appreciated that other terms could be used such as imaging apparatus or device or image generation apparatus. In some examples the camera may be a video generating device for capturing video images or a high definition imaging apparatus for capturing high resolution photographs. Similarly, as indicated above, a drone is one example of a reconnaissance vehicle or remote controlled vehicle.

In accordance with the PTP which is a USB communication standard (communication protocol), the drone main body control device (controller) 20 transmits various photographing control commands such as an image photographing start, an image photographing stop, and an image photographing setting to the camera 30.

The drone main body control device 20 carries out wireless communication with a remote controller 40 owned by the user who is the drone administrator on the ground and performs flight in accordance with a command input from the remote controller 40.

The photographed image of the camera 30 is transferred from the camera 30 to the drone main body control device 20 and further transmitted from the drone main body control device 20 to a PC 50 on the ground.

The camera 30 of the present disclosure autonomously performs switching between the image photographing mode and the image transfer mode.

Specifically, in a case where the camera 30 is set to the image photographing mode, the camera 30 receives various photographing control commands such as the image photographing start, the image photographing stop, and the image photographing setting from the drone main body control device (controller) 20 in accordance with the PTP which is the USB communication standard (communication protocol), and performs the photographing process.

On the other hand, in a case where the camera 30 is set to the image transfer mode, the camera 30 transfers the photographed images to the drone main body control device 20 at a high speed using the mass storage class (MSC) which is the USB data transfer standard.

The drone main body control device 20 further transmits the photographed image data input from the camera 30 to the PC 50.

With a series of processes described above, the user on the ground can immediately check the photographed images of the camera 30 in the sky.

The system illustrated in Fig. 1 is a system in which the camera-equipped drone 10 flies in accordance with the control information transmitted from the remote controller 40 owned by the user on the ground, but a configuration in which the camera-equipped drone 10 receives the position information such as GPS and performs flight autonomously without performing the flight control by the remote controller 40 may be provided.

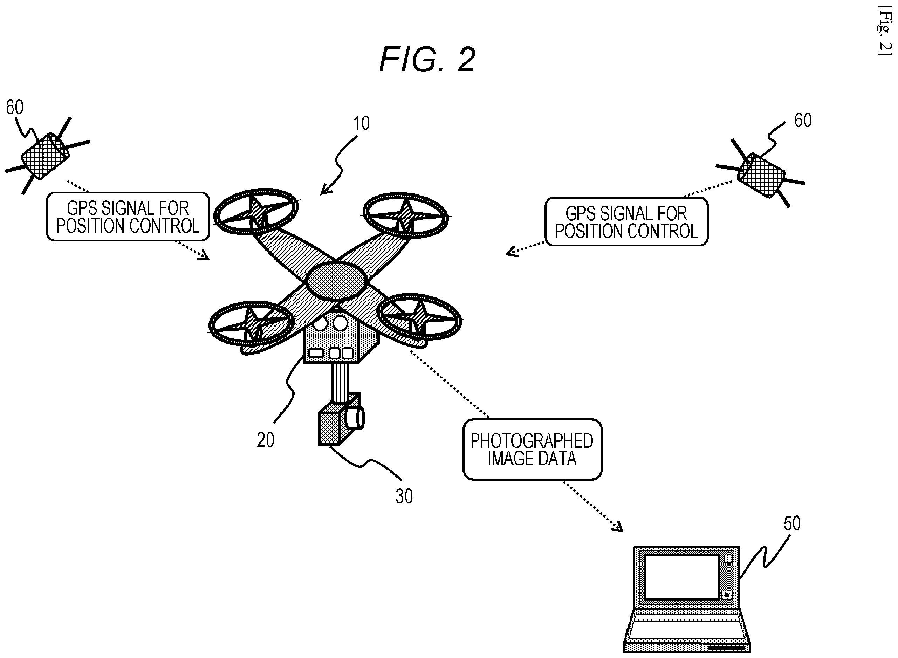

A configuration of an autonomic flight type drone system to which the process of the present disclosure can be applied will be described with reference to Fig. 2.

Fig. 2 illustrates a camera-equipped drone 10, similarly to Fig. 1. The camera-equipped drone 10 includes a drone main body control device (controller) 20 and a camera 30.

The drone main body control device 20 and the camera 30 are connected via a USB.

The drone main body control device (controller) 20 transmits various photographing control commands such as the image photographing start, the image photographing stop, and the image photographing setting to the camera 30 in accordance with the PTP which is the USB communication standard (communication protocol).

In the configuration illustrated in Fig. 2, the drone main body control device 20 receives GPS signals from GPS satellites 60, checks its own position, and performs flight in accordance with a flight route according to a program stored in a memory in the drone main body control device 20.

Further, if a prespecified position is reached, the photographing start command is output to the camera 30 to start the photographing process. Further, photographing of various images is performed in accordance with the program, and if a predetermined photographing process is completed, a photographing end command is output to the camera 30.

In the present configuration, the photographed image of the camera 30 is transferred from the camera 30 to the drone main body control device 20 and further transmitted from the drone main body control device 20 to the PC 50 on the ground.

In the present configuration, the camera 30 of the present disclosure autonomously performs switching between the image photographing mode and the image transfer mode. In other words, in a case where the camera 30 is set to the image photographing mode, the camera 30 receives various photographing control commands such as the image photographing start, the image photographing stop, and the image photographing setting from the drone main body control device (controller) 20 in accordance with the PTP which is the USB communication standard (communication protocol), and performs the photographing process.

On the other hand, if the camera 30 is set to the image transfer mode, the camera 30 transfers the photographed images from the camera 30 to the drone main body control device 20 at a high speed using the mass storage class (MSC) which is the USB data transfer standard.

The drone main body control device 20 further transmits the photographed image data input from the camera 30 to the PC 50.

With a series of processes described above, the user on the ground can immediately check the photographed images of the camera 30 in the sky.

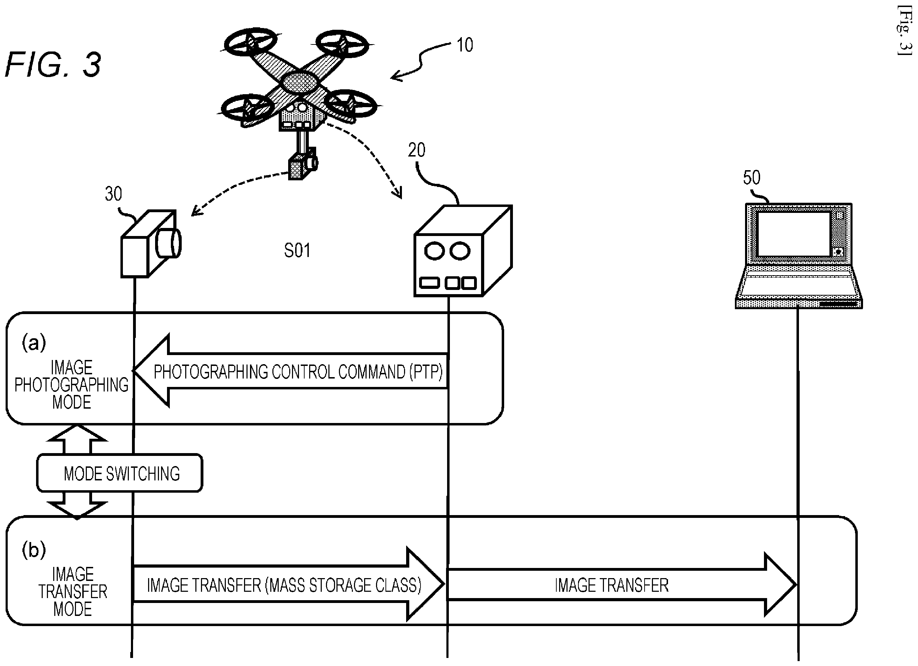

An example of a communication process between the respective devices in the system illustrated in Fig. 1 and Fig. 2 will be described with reference to Fig. 3.

Fig. 3 illustrates the camera 30 and the drone main body control device 20 constituting the camera-equipped drone 10 which flies over the sky and the PC 20 on the ground side.

As described with reference to Figs. 1 and 2, the camera 30 autonomously performs switching between the image photographing mode and image transfer mode.

The communication processing illustrated in Fig. 3(a) is a communication process example in a case where the camera 30 is set to the image photographing mode.

In a case where the camera 30 is set to the image photographing mode, the camera 30 receives various photographing control commands such as the image photographing start, the image photographing stop, and the image photographing setting from the drone main body control device (controller) 20 in accordance with the PTP which is the USB communication standard (communication protocol), and performs the photographing process.

The communication process illustrated in Fig. 3(b) is a communication process example in a case where the camera 30 is set to the image transfer mode.

In a case where the camera 30 is set to the image transfer mode, the camera 30 transfers the photographed images to the drone main body control device 20 at a high speed using the mass storage class (MSC) which is the USB data transfer standard.

The drone main body control device 20 further transmits the photographed image data input from the camera 30 to the PC 50.

With a series of processes described above, the user on the ground can immediately check the photographed images of the camera 30 in the sky.

Further, the switching process of the image photographing mode and the image transfer mode by the camera 30 is executed by the camera 30 on the basis of a moving speed of the camera-equipped drone 10, an image photographing interval, or the like.

A specific example of the mode switching process will be described in detail later.

### <2. Configuration example of drone main body control device and camera>

Next, a configuration example of the drone main body control device 20 and the camera 30 constituting the camera-equipped drone 10 will be described.

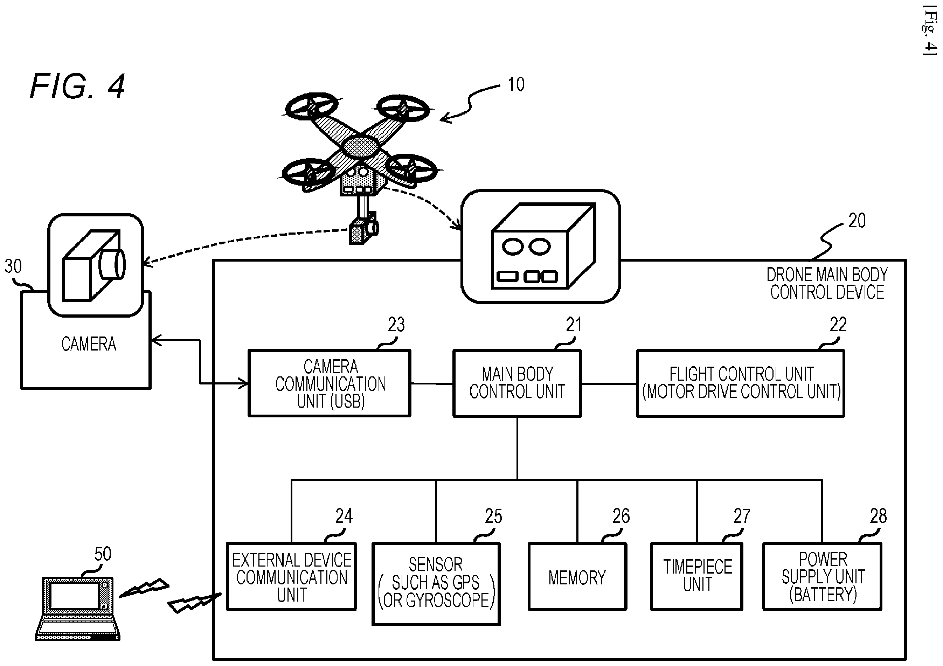

Fig. 4 is a block diagram illustrating a configuration example of the drone main body control device 20 constituting the camera-equipped drone 10.

As illustrated in Fig. 4, the drone main body control device 20 includes a main body control unit 21, a flight control unit 22, a camera communication unit 23, an external device communication unit 24, a sensor (a GPS, a gyroscope, or the like) 25, a memory 26, a timepiece unit 27, and a power supply unit (battery) 28.

The main body control unit 21 controls the drone main body in general. For example, the main body control unit 21 executes control for performing flight according to a preset flight program or a photographing process according to a photographing program.

The program is stored in the memory 26. The main body control unit 21 has a program execution function such as a CPU and reads out and executes the program stored in the memory 26.

Specifically, the flight control unit 22 performs, for example, motor drive control of a propeller. The flight control unit 22 controls the rotation speed and the like of the plurality of propellers such that the flight according to the program is performed in accordance with an instruction from the main body control unit 21.

The camera communication unit 23 executes communication with the camera 30.

In this example, the camera communication unit 23 is configured as a communication unit that performs USB communication according to a USB standard.

The camera communication unit 23 performs communication according to each protocol of the PTP and the mass storage class (MSC) described above with reference to Fig. 3.

In a case where the camera 30 is set to the image photographing mode, various photographing control commands such as the image photographing start, the image photographing stop, and the image photographing setting are transmitted to the camera 30 in accordance with the PTP which is one of USB data communication protocols.

On the other hand, in a case where the camera 30 is set to the image transfer mode, the photographed image is input from the camera 30 using the mass storage class (MSC) which is the USB data transfer standard.

The external device communication unit 24 performs communication with, for example, a PC on the ground, a remote controller, or the like.

In a case where maneuver by the remote controller is performed as described above with reference to Fig. 1, maneuver manipulation information or the like by the user is received from the remote controller, and the flight control is performed.

Further, in a case where autonomous flight using the GPS signal or the like is performed as described with reference to Fig. 2, the maneuver information from the remote controller is not received, and the flight according to the programed flight route stored in the memory 26 is performed while performing self-position checking using the GPS signal received by the sensor (The GPS, the gyroscope, or the like) 25. Further, the sensor 25 is constituted by various self-position estimating devices such as a gyroscope and a camera or a motion estimating device in addition to the GPS.

The external device communication unit 24 also performs a process of transmitting the photographed image of the camera 30 to the PC on the ground.

As described above, in a case where the camera 30 is set to the image transfer mode, the photographed image is input from the camera 30 to the drone main body control device 20 using the mass storage class (MSC) which is the USB data transfer standard.

The drone main body control device 20 transmits the input image from the camera 30 to the PC or the like on the ground through the external device communication unit 24.

Note that the photographed image input from the camera 30 may be temporarily stored in the memory 26, and then the image read from the memory 26 may be transmitted to the PC or the like on the ground through the external device communication unit 24.

Further, the external device communication unit 24 also performs a process of transmitting a flight state to a management device such as a base center, and the like.

The memory 26 is used as a storage area of a program executed by the main body control unit 21 and parameters of various processes, a work area for data processing executed by the main body control unit 21, and the like.

The timepiece unit 27 has a clock function and a timer function for performing acquisition of a current time, a time measurement process, and the like.

The power supply unit (battery) 28 supplies electric power to the components of the drone main body control device 20.

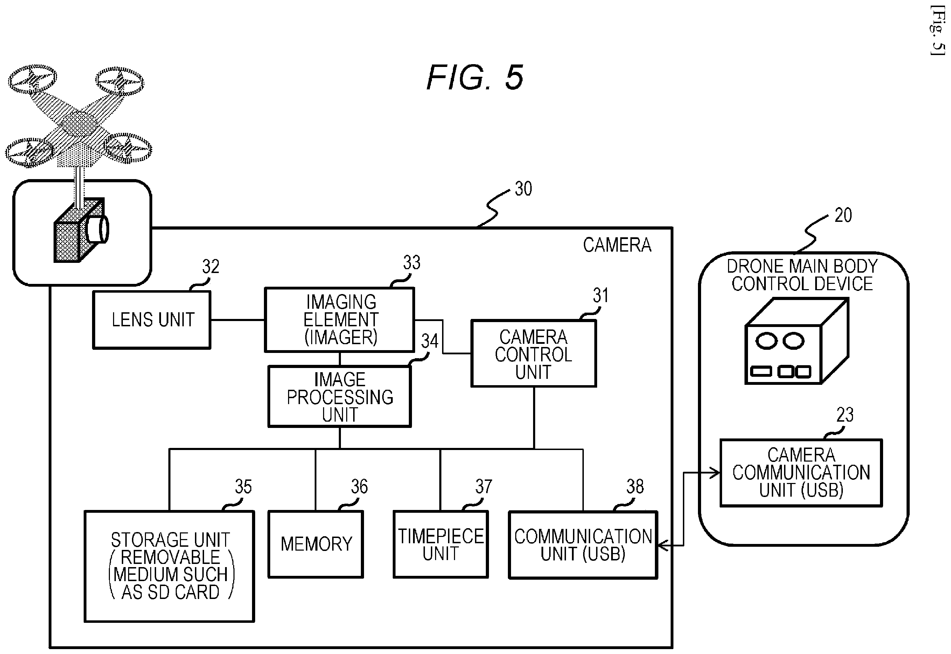

Next, a configuration example of the camera 30 will be described with reference to Fig. 5.

As illustrated in Fig. 5, the camera 30 includes a camera control unit 31, a lens unit 32, an imaging element (imager) 33, an image processing unit 34, a storage unit 35, a memory 36, a timepiece unit 37, and a communication unit 38. The lens unit 32, the imaging element 33 and the image processing unit 34 may be considered to form in combination an image capturing unit which is configured in operation to capture images of a target photographic area which are stored in the storage unit 35. In some examples the image capturing unit is configured to capture video images and in other examples photographic images which may be high definition images.

The camera control unit 31 controls the processing executed by the camera 30 in general. For example, the camera control unit 31 includes a CPU or the like which executes a program stored in the memory 36, and performs photographing control. Furthermore, the camera control unit 31 also controls communication with the drone main body control device 20. Further, the camera control unit 31 detects various states of the camera 30 and performs mode switching, that is, switching between the image photographing mode and the image transfer mode in accordance with the state. Further, the camera control unit 31 performs switching between PTP communication and mass storage class (MSC) communication in accordance with each mode. The mode change process will be described later in detail.

The lens unit 32 and the imaging element (imager) 33 are components for performing image photographing.

The lens unit 32 includes a focus lens, a zoom lens, and the like.

The imaging element (imager) 33 includes a CMOS image sensor, a CCD image sensor, or the like.

The image data computerized by the imaging element (imager) 33 is input to the image processing unit 34.

The image processing unit 34 executes general image processing such as a white balance adjustment and an image compression process. For example, compressed images of a JPEG or MPEG format are generated and stored in the storage unit 35.

The storage unit 35 is constituted by, for example, a flash memory such as an SD card, and the like.

Further, the image stored in the storage unit 35 is output to the drone main body control device 20 side via the communication unit 38 under the control of the control unit 31 after the camera 30 is switched from the image photographing mode to the image transfer mode. This process is performed in accordance with the mass storage class (MSC) which is the USB data transfer standard.

The camera 30 includes no manipulating unit, and various photographing controls such as photographing start, stop, and zoom setting are executed in accordance with the photographing control command input from the drone main body control device 20 via the communication unit 38.

As described above, this control command is transmitted and received between the camera communication unit 23 of the drone main body control device 20 and the communication unit 38 of the camera 30 in accordance with the PTP which is one of USB communication standards.

The memory 36 is used as a storage area of a program executed by the camera control unit 31 and parameters of various processes, a work area of data processing executed by the camera control unit 31, and the like.

The timepiece unit 37 has a clock function and a timer function for performing acquisition of a current time, a time measurement process, and the like.

The communication unit 38 is connected to the camera communication unit 23 of the drone main body control device 20, and in a case where the camera 30 is set to the image photographing mode, the communication unit 38 receives the photographing control information such as the photographing start command, and the like from the drone main body control device 20 in accordance with the USB communication standard (PTP).

Further, if the camera 30 is set to the image transfer mode, the photographed image is output to the drone main body control device 20 in accordance with the mass storage class (MSC) which the USB communication standard. Although the camera could be provided with different interfaces to support the control of the camera according to the PTP and the transfer of the captured images according to the MTC communications protocol, it will be appreciated that using the same interface can reduce component costs and size. Therefore providing a switching between the different modes, the same USB interface can be used for controlling the camera in the image photographing mode and transferring the captured images in the image transfer mode.

### <3. Specific example of switching process between image photographing mode and image transfer mode>

Next, a specific example of the switching process between the image photographing mode and the image transfer mode will be described.

As described above, the camera 30 mounted in the camera-equipped drone 10 autonomously performs switching between the photographing mode and the image transfer mode.

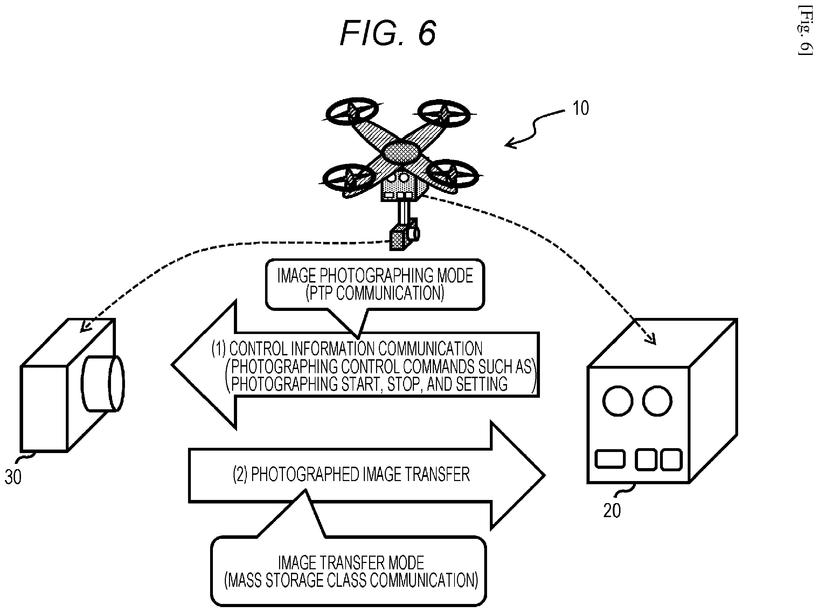

In the image photographing mode, as illustrated in Fig. 6(1), the camera 30 receives various photographing control commands such as the image photographing start, the image photographing stop, and the image photographing setting from the drone main body control device (controller) 20 in accordance with the USB communication standard (PTP), and performs the photographing process.

In the image transfer mode, as illustrated in Fig. 6(2), the camera 30 transfers photographed image to the drone main body control device 20 at a high speed using the mass storage class (MSC) which is the USB data transfer standard.

The drone main body control device 20 further transmits the photographed image data input from the camera 30 to the PC 50.

With a series of processes described above, the user on the ground can immediately check the photographed image of the camera 30 in the sky.

The switching process between the image photographing mode and the image transfer mode by the camera 30 is executed by the camera 30 on the basis of the moving speed of the camera-equipped drone 10, the image photographing interval, or the like.

When the switching process is performed from the image photographing mode to the image transfer mode, the camera 30 disconnects a PTP connection with the drone main body control device 20.

If it is detected that the PTP connection is disconnected, the drone main body control device 20 executes a new device detection process on a USB-connected device, that is, the camera 30.

The drone main body control device 20 performs a device information request (descriptor request) to the camera 30 in the device detection process. In response to the request, the camera 30 transmits device information indicating that it is a mass storage device which performs communication in accordance with a mass storage protocol.

Upon receiving the response, the drone main body control device 20 recognizes the camera 30 as the mass storage device.

After the mode switching, the drone main body control device 20 can read the photographed image data stored in the storage unit 35 of the camera 30 at a high speed in accordance with a communication protocol compatible with the mass storage class (MSC).

The drone main body control device 20 transmits the read photographed image data to the user side device such as the PC on the ground.

With a series of processes described above, the user on the ground can immediately check the photographed image of the camera 30 in the sky.

A specific example of the switching process between the image photographing mode and the image transfer mode by the camera 30 will be described below.

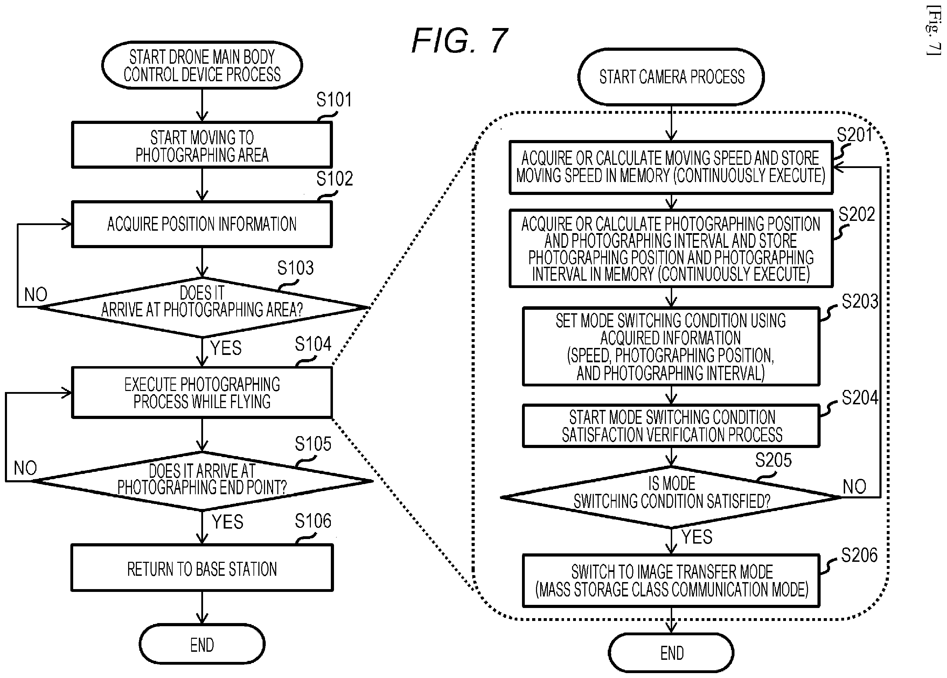

Fig. 7 illustrates a process executed by the drone main body control device 20 on the left side, and illustrates a flow chart for describing a sequence of a process executed by the camera 30 on the right side.

The process (steps S201 to S206) executed by the camera 30 illustrated on the right side is a process of step S104 executed by the drone main body control device 20 on the left side, that is, the process executed during a period of a "process of photographing while flying".

The processes illustrated in the flowcharts will be described below.

Further, the process of the drone main body control device 20 illustrated in the flowchart on the left side is executed under the control of the main body control unit 21 of the drone main body control device 20. For example, the process is executed under the control of the main body control unit 21 including a CPU or the like having a program execution function in accordance with the program stored in the memory 26.

Further, the process of the camera 30 illustrated in the flowchart on the right side is executed under the control of the camera control unit 31 of the camera 30. For example, the process is executed under the control of the camera control unit 31 including a CPU or the like having a program execution function in accordance with the program stored in the memory 36.

First, the process of the drone main body control device 20 will be sequentially described in accordance with the flowchart illustrated on the left side.

### (Step S101)

First, in step S101, the drone main body control device 20 starts moving to a photographing area.

For example, the drone main body control device 20 starts moving to a preset destination while acquiring GPS position information. Further, the position information of the destination is assumed to be already stored in the memory 26 of the drone main body control device 20.

### (Step S102)

Then, in step S102, the drone main body control device 20 acquires the GPS position information.

### (Step S103)

Then, in step S103, the drone main body control device 20 compares the acquired GPS position information with the position information of the destination stored in the memory 26 of the drone main body control device 20, and determines whether or not it arrives at the photographing area.

In a case where it is determined not to arrive at the photographing area, the flight is continued and the position information acquisition process of step S102 is executed continuously.

If it is determined to arrive at the photographing area, the process proceeds to step S104.

### (Step S104)

In a case where it is determined in step S103 that the drone main body control device 20 arrives at the photographing area, in step S104, the photographing process is started.

The main body control unit 21 of the drone main body control device 20 outputs the photographing start command to the camera 30 via the camera communication unit 23 and causes the camera 30 to start the photographing process.

Further, the output of the photographing start command is performed in accordance with the PTP which is the USB communication standard.

The camera 30 receives the photographing start command from the drone main body control device 20 and starts photographing an image.

In the execution period of this photographing process in step S104, the process of the camera 30 illustrated on the right side of Fig. 7 is executed.

The process of the camera 30 will be described later.

### (Step S105)

Then, in step S105, the drone main body control device 20 determines whether or not it arrives at a photographing end point.

The determination process is also executed by comparing position information of the photographing end position stored in the memory 26 of the drone main body control device 20 with the GPS position information.

In a case where it is determined not to arrive at the photographing end point, the photographing process of step S104 is continued.

On the other hand, in a case where it is determined to arrive at the photographing end point, the process proceeds to step S106.

### (Step S106)

In a case where it is determined in step S105 that the drone main body control device 20 arrives at the photographing end point, in step S106, a moving flight process for returning to the base station (drone base) is started.

Next, the process executed by the camera 30 will be described in accordance with the flowchart illustrated on the right side of Fig. 7.

The process flow executed by the camera 30 illustrated on the right side of Fig. 7 is the process executed in the step S104 of the flow executed by the drone main body control device 20 illustrated on the left side, that is, the process executed in the period of the "process of photographing while flying."

Further, the camera 30 is set to the image photographing mode as an initial setting. In other words, the image photographing mode in which it is possible to perform communication with the drone main body control device 20 in accordance with the PTP which is the USB communication standard.

### (Step S201)

First, in step S201, the camera 30 acquires or calculates the moving speed of the camera 30 (= drone) and stores the moving speed in the memory.

The moving speed of the camera 30 (= drone) is input from, for example, the drone main body control device 20. Alternatively, the camera 30 periodically receives the position information acquired on the basis of the GPS by the drone main body control device 20, and calculates the speed by applying the position information and the elapsed time measured by the timepiece unit 37.

The acquired or calculated speed information is stored in the memory 36.

Further, the moving speed information acquisition or calculation processing and the memory storage process are continuously executed at predetermined intervals.

### (Step S202)

Then, in step S202, the camera 30 acquires or calculates the photographing position and the photographing interval in units of images photographed in the camera 30 and stores the photographing position and the photographing interval in the memory.

The position information acquired on the basis of the GPS by the drone main body control device 20 is used as the position information, and the time information measured by the timepiece unit 37 is used as the photographing time information. Further, as the photographing time information, the measured time information of the timepiece unit 27 of the drone main body control device 20 or the time information attached to the GPS signal may be input and acquired.

The acquired or calculated photographing position and the photographing time information are stored in the memory 36.

Further, the photographing position/photographing interval acquisition or calculation process and the memory storage process are continuously executed at a predetermined interval.

### (Step S203)

Then, in step S203, the camera 30 sets a mode switching condition using at least one of the moving speed, the photographing position, the photographing interval, and such information that are continuously acquired or calculated.

The mode switching condition is a switching condition from the image photographing mode which is the current setting mode of the camera to the image transfer mode.

Specifically, a condition under which image photographing is executed is estimated on the basis of the photographing pattern of every two or more images after the photographing process is started.

For example, in a case where a photographing pattern in which moving and stopping are repeated, an image photographing command is input from the drone main body control device 20 at the stop position, and image photographing is performed is detected, the image photographing can be estimated not to be executed during the movement but to be executed only in the stop period.

Further, the image photographing command input from the drone main body control device 20 is a command to be input in accordance with the PTP protocol set in the image photographing mode.

Further, in a case where a photographing pattern in which high-speed movement from the base station to a certain area is performed, and the image photographing is performed at constant intervals while moving after switching to low-speed movement is performed is detected, the image photographing can be estimated not to be executed during the high-speed movement but to be executed only in the low-speed movement period. Further, the image photographing can be estimated to be performed at constant intervals.

As described above, in step S203, the camera 30 estimates the condition under which the image photographing is executed on the basis of the photographing pattern of every two or more images after the photographing process is started.

### (Step S204)

Then, in step S204, the camera 30 starts a mode switching condition satisfaction verification process.

The mode switching condition is a switching condition from the image photographing mode which is the current setting mode of the camera to the image transfer mode.

Further, communication between the drone main body control device 20 and the camera 30 is executed in accordance with the PTP protocol in the image photographing mode and executed in accordance with the mass storage class (MSC) protocol in the image transfer mode.

The mode switching condition satisfaction verification process is executed as a verification process differing depending on the image photographing pattern.

In other words, the verification process in accordance with the photographing pattern determined in step S203 is executed.

A specific verification process example will be described later.

### (Step S205)

After the mode switching condition satisfaction verification process is started in step S204, in step S205, the camera 30 determines whether or not the mode switching condition is satisfied.

In other words, it is determined whether or not the switching condition from the image photographing mode which is the current setting mode of the camera to the image transfer mode is satisfied.

In a case where it is determined that the mode switching condition is not satisfied, the process returns to step S201, and the process of step S201 and subsequent steps is repeatedly executed.

On the other hand, in a case where it is determined that the mode switching condition is satisfied, the process proceeds to step S206.

### (Step S206)

In a case where it is determined in the determination process of step S205 that the switching condition from the image photographing mode which is the current setting mode of the camera to the image transfer mode is satisfied, the process proceeds to step S206. In step S206, the camera control unit 31 of the camera 30 executes the switching process from the image photographing mode which is the current setting mode of the camera to the image transfer mode.

After the mode switching, the drone main body control device 20 executes the process of reading the photographed image data stored in the storage unit 35 of the camera 30 at a high speed in accordance with the communication protocol compatible with the mass storage class (MSC).

The drone main body control device 20 transmits the read photographed image data to the user side device such as the PC on the ground.

With a series of processes described above, the user on the ground can immediately check the photographed image of the camera 30 in the sky.

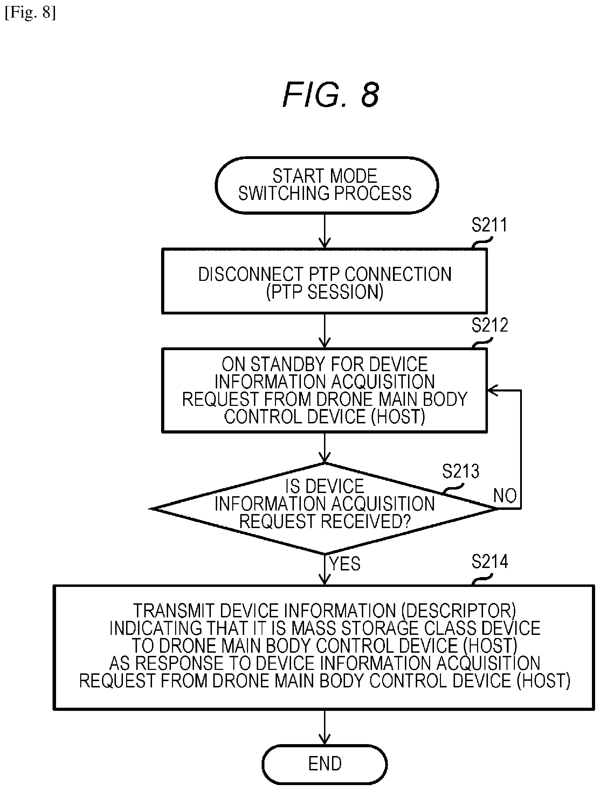

A specific example of a processing procedure of the mode switching process in step S206 will be described with reference to a flowchart illustrated in Fig. 8.

The flowchart illustrated in Fig. 8 is a flowchart illustrating a detailed example of the processing of step S206 which is the final step of the flow on the right side illustrated in Fig. 7.

A process of each step in the flow illustrated in Fig. 8 will be described.

### (Step S211)

In a case where it is determined in the determination process of step S205 of the flow illustrated in Fig. 7 that the switching condition from the image photographing mode which is the current setting mode of the camera to the image transfer mode is satisfied, in step S211, the camera 30 disconnects the PTP connection (PTP session) with the drone main body control device 20.

### (Step S212)

Then, in step S212, the camera 30 is on standby for an input of a device information acquisition request from the drone main body control device 20 which is the host device.

If the PTP connection is detected to be disconnected, the drone main body control device 20 executes a new device detection process on the USB-connected device, that is, the camera 30.

### (Step S213)

In step S213, the camera 30 determines whether or not the device information acquisition request from the drone main body control device 20 is received and continues the standby process of step S212 in a case where the device information acquisition request is not received.

On the other hand, in a case where it is determined that the device information acquisition request from the drone main body control device 20 is received, the process proceeds to step S214.

### (Step S214)

In step S214, the camera 30 transmits the device information (descriptor) indicating that it is a mass storage device which performs communication in accordance with the mass storage protocol to the drone main body control device 20 as a response to the device information acquisition request from the drone main body control device 20.

Upon receiving the response, the drone main body control device 20 recognizes the camera 30 as the mass storage device and executes subsequent communication in accordance with the communication protocol compatible with the mass storage class (MSC).

After the mode switching, the drone main body control device 20 executes the process of reading the photographed image data stored in the storage unit 35 of the camera 30 at a high speed in accordance with the communication protocol compatible with the mass storage class (MSC).

The drone main body control device 20 transmits the read photographed image data to the user side device such as the PC on the ground.

With a series of processes described above, the user on the ground can immediately check the photographed image of the camera 30 in the sky. According to some examples the camera may be provided with a position sensor such as a GPS unit in order to detect its position and therefore determine whether it should capture images or video of a photographic area at a desired location according to pre-stored location coordinates. However reconnaissance vehicles such as drones are conventionally provided with position sensors such as GPS receivers in order to estimate their location and follow a flight path autonomously. Accordingly by arranging for control information communicated from the drone control body unit to the cameras via the USB interface to include position information, the camera can be configured to determine its location and speed using the GPS receiver of the drone, thereby reducing a cost of the camera.

### <4. Setting of mode switching condition according to various photographing situations and specific example of mode switching process>

Next, a setting of the mode switching condition according to various photographing situations and the specific example of the mode switching process will be described.

The following three process examples are sequentially described:
(first process example) a process example in which the moving speed and the photographing process stop period are used as a mode switching determination condition;
(second process example) a process example in which the current position and the photographing process stop period are used as the mode switching determination condition; and
(third process example) a process example in which the moving speed is used as the mode switching determination condition. The three process examples will be described.

### <4-1. (First process example) process example in which moving speed and photographing process stop period are used as mode switching determination condition>

First, a process example in which the moving speed and the photographing process stop period are used as a mode switching determination condition will be described as a first process example.

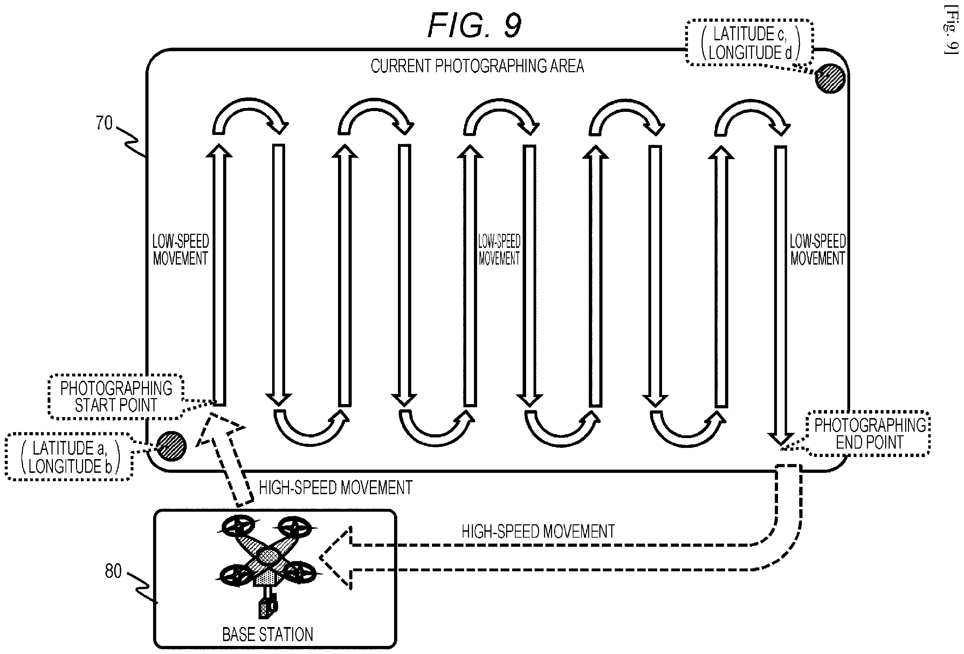

The first process example is a process example in a case where the camera-equipped drone 10 moves from a base station (base) 80 to a current photographing area 70 at a high speed, switches to the low-speed movement after arriving at the current photographing area 70, and photographs images at constant intervals while performing the low-speed movement in the current photographing area 70 as illustrated in Fig. 9.

The camera-equipped drone 10 moves from the base station (base) 80 to the current photographing area 70, and performs image photographing in accordance with a prespecified flight route at photographing intervals prespecified on the flight route.

Further, the movement route to the current photographing area 70, the flight route in the current photographing area 70, the photographing timing, and the like are all recorded in the program stored in the memory 26 of the drone main body control device 20.

The drone main body control device 20 sequentially outputs the position information to the camera 30, and outputs a photographing execution command or photographing setting information such as focus and zoom settings at a photographing execution timing of each image, and the camera 30 executes the photographing process according to the input information.

The camera-equipped drone 10 starts the photographing from a photographing start point of the current photographing area 70 and executes the image photographing process in accordance with a prespecified program up to the photographing end point of the current photographing area 70.

If the image photographing is completed, the camera-equipped drone 10 moves to the base station (base) 80 and lands.

The first process example is a process example in which the moving speed of the camera-equipped drone 10 and the photographing process stop period are used as the mode switching determination condition.

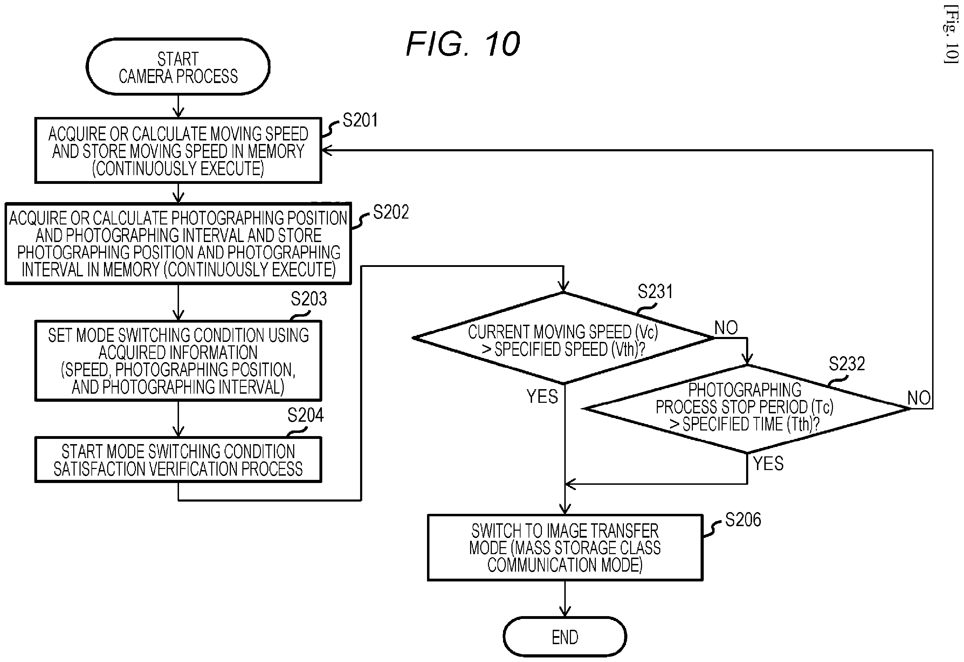

A processing sequence executed by the camera 30 in the first process example will be described with reference to a flowchart illustrated in Fig. 10.

The flowchart illustrated in Fig. 10 is a process flow similar to the process flow (steps S201 to S206) of the camera described above with reference to the flow on the right side of Fig. 7.

A process of steps S201 to S204 and step S206 in the flow illustrated in Fig. 10 is a process corresponding to the process of steps S201 to S204 and step S206 in the flow illustrated in Fig. 7.

A process of steps S231 to S232 of the flow illustrated in Fig. 10 corresponds to the process of step S205 of the flow illustrated in Fig. 7, and is the first process example, that is, a process executed in which the current moving speed and the photographing process stop period are used as the mode switching determination condition.

A process of each step of the flow illustrated in Fig. 10 will be described.

### (Steps S201 to S204)

A process of steps S201 to S204 corresponds to the process of steps S201 to S204 described above with reference to Fig. 7.

These processes will be briefly described.

First, in step S201, the camera 30 acquires or calculates the moving speed of the camera 30 (= drone) and stores the moving speed in the memory.

Then, in step S202, the photographing position and the photographing interval are acquired or calculated in units of images photographed in the camera 30 and stored in the memory.

Then, in step S203, the mode switching condition is set using at least one of the acquired information (the speed, the photographing position, and the photographing interval) and such information.

The present process example is a process example in a case where the camera-equipped drone 10 moves from a base station (base) 80 to a current photographing area 70 at a high speed, switches to the low-speed movement after arriving at the current photographing area 70, and photographs images at constant intervals while performing the low-speed movement in the current photographing area 70 as described above with reference to Fig. 9.

In this case, the camera 30 detects that the image is being photographed at constant intervals while performing the low-speed movement after switching to the low-speed movement. On the basis of the detection information, the camera 30 determines that the image photographing is performed at constant intervals while performing the low-speed movement, and determines that the image photographing pattern has the following setting:
the image photographing is performed only at the time of low-speed movement; and
the image photographing is performed at constant intervals.

On the basis of the image photographing pattern, the following conditions are set as the condition for switching the image photographing mode to the image transfer mode:
(first condition) the camera-equipped drone starts the high-speed movement; and
(second condition) the image photographing interval exceeds a certain time.

In a case where any one of the conditions is satisfied, the image photographing mode is switched to the image transfer mode.

In step S203, the mode switching condition is set.

Then, in step S204, the satisfaction verification process for the mode switching condition set in step S203 is started.

The first process example is a process example in which the current moving speed and the photographing process stop period are used as the mode switching determination condition, and the determination process is the process of steps S231 to S232. These processes will be described.

### (Step S231)

First, in step S231, the camera 30 determines whether or not the current moving speed (Vc) of the camera 30 exceeds a specified speed (Vth).

Further, the current moving speed (Vc) of the camera 30 is equal to the current moving speed of the camera-equipped drone 10.

The specified speed (Vth) information used as a threshold value is, for example, a speed between a speed at the time of high-speed movement from the base station 80 illustrated in Fig. 9 to the current photographing area 70 and a speed at the time of low-speed movement after the photographing is started in the current photographing area 70.

The specified speed (Vth) information used as a threshold value is stored in the memory 36 of the camera 30 in advance. For example, the specified speed (Vth) information is stored when the mode switching condition is set in step S203.

Further, the camera 30 sequentially calculates a current speed (Vc) of the camera 30 (= drone) using the GPS position information or the like input from the drone main body control device 20.

Using such information, the camera 30 determines whether or not the current moving speed (Vc) of the camera 30 exceeds the specified speed (Vth).

In a case where it is determined that the current moving speed (Vc) of the camera 30 does not exceed the specified speed (Vth), the process proceeds to step S232.

On the other hand, in a case where it is determined that the current moving speed (Vc) of the camera 30 exceeds the specified speed (Vth), the process proceeds to step S206, and the switching process from the image photographing mode which is the current setting mode of the camera to the image transfer mode is executed.

### (Step S232)

In a case where it is determined in the determination process of step S231 that the current moving speed (Vc) of the camera 30 exceeds the specified speed (Vth), the process proceeds to step S232.

In step S232, the camera 30 determines whether or not the stop period (Tc) of the image photographing process exceeds a specified period (Tth) which is a prespecified threshold value.

As described above, the camera 30 photographs each image in accordance with the photographing execution command from the drone main body control device 20. In other words, in the image photographing mode, the camera 30 receives the command from drone main body control device 20 via a PTP communication session established as a communication session between the drone main body control device 20 and the camera 30, and performs the photographing.

The camera 30 measures the stop period of the input of the photographing command from the drone main body control device 20 through the timepiece unit 37 and determines whether or not the stop period of the input of the photographing command (= the stop period (Tc) of the image photographing process) exceeds the specified period (Tth) which is a prespecified threshold time.

In a case where it is determined that the stop period (Tc) of the image photographing process exceeds the specified period (Tth) which is the prespecified threshold time, the process proceeds to step S206, and the switching process from the image photographing mode which is the current setting mode of the camera to the image transfer mode is executed.

On the other hand, in a case where it is determined that the stop period (Tc) of the image photographing process does not exceed the specified period (Tth) which is the prespecified threshold time, the process returns to step S201.

### (Step S206)

In a case where it is determined in the determination process of steps S231 to S232 that the switching condition from the image photographing mode which is the current setting mode of the camera to the image transfer mode is satisfied, the process proceeds to step S206. In step S206, the camera control unit 31 of the camera 30 executes the switching process from the image photographing mode which is the current setting mode of the camera to the image transfer mode.

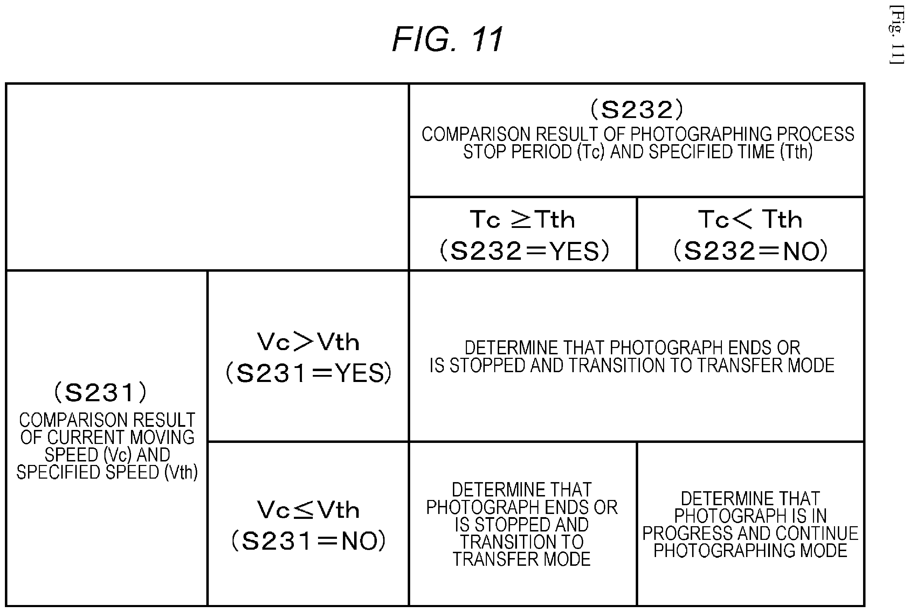

A correspondence relation between the determination processes of steps S231 to S232 and whether or not the mode switching is executed will be described with reference to Fig. 11.

Fig. 11 illustrates processes based on a combination of the following two determination steps (Yes/No):
on the left side, the determination process of step S231, that is, the determination process of whether or not the current moving speed (Vc) exceeds the specified speed (Vth); and
on the upper side, the determination process of step S232, that is, the determination process of whether or not the photographing process stop period (Tc) exceeds the specified period (Tth)

As illustrated in Fig. 11, in a case where the determination process of step S231 on the left is Yes, that is, in a case where it is determined that the current moving speed (Vc) exceeds the specified speed (Vth), the switching process from the image photographing mode which is the current setting mode of the camera to the image transfer mode is executed regardless of the determination process result of step S232 (regardless of whether or not the photographing process stop period (Tc) exceeds the specified period (Tth)).

On the other hand, in a case where the determination process of step S231 on the left side is No, that is, in a case where it is determined that the current moving speed (Vc) does not exceed the specified speed (Vth), a process to be executed differs depending on the determination process result of step S232 as follows.

In a case where the determination result of step S232 is Yes, that is, in a case where it is determined that the photographing process stop period (Tc) exceeds the specified period (Tth),
it is determined that the photographing ends or is stopped, and the switching process from the image photographing mode which is the current setting mode of the camera to the image transfer mode.

On the other hand, in a case where the determination result of step S232 is No, that is, in a case where it is determined that the photographing process stop period (Tc) does not exceed the specified period (Tth),
it is determined that the photographing is in progress and the image photographing mode which is the current setting mode of the camera is continued.

As described above, after the mode switching of step S206, the drone main body control device 20 reads the photographed image data stored in the storage unit 35 of the camera 30 at a high speed in accordance with the communication protocol compatible with the mass storage class (MSC) and transmits the photographed image data to the user side device such as the PC on the ground.

With a series of processes described above, the user on the ground can immediately check the photographed image of the camera 30 in the sky.

### <4-2. (Second process example) process example in which current position and photographing process stop period are used as the mode switching determination condition>

Next, a process example in which the current position and the photographing process stop period are used as the mode switching determination condition will be described as a second process example.

The second process example is a process example in a case where the camera-equipped drone 10 moves from a base station (base) 80 to a current photographing area 70 at a high speed, switches to the low-speed movement after arriving at the current photographing area 70, and photographs images at constant intervals while performing the low-speed movement in the current photographing area 70 as illustrated in Fig. 9, similarly to the first process example described above.

In the second process example, the position information of the current photographing area 70 is used as the mode switching condition instead of the speed information.

For example, as illustrated in Fig. 9, the current photographing area 70 is specified in advance.

The current photographing area 70 illustrated in Fig. 9 is specified as a rectangular area of (latitude a, longitude b) to (latitude c, longitude d).

The camera-equipped drone 10 moves from the base station (base) 80 to the current photographing area 70, and performs the image photographing in accordance with a prespecified flight route at photographing intervals prespecified on the flight route.

Further, the movement route to the current photographing area 70, the flight route in the current photographing area 70, the photographing timing, and the like are all recorded in the program stored in the memory 26 of the drone main body control device 20.

The drone main body control device 20 sequentially outputs the position information to the camera 30, and outputs a photographing execution command or photographing setting information such as focus and zoom settings at a photographing execution timing of each image, and the camera 30 executes the photographing process according to the input information.

The camera-equipped drone 10 starts the photographing from a photographing start point of the current photographing area 70 and executes the image photographing process in accordance with a prespecified program up to the photographing end point of the current photographing area 70.

If the image photographing is completed, the camera-equipped drone 10 moves to the base station (base) 80 and lands.

The second process example is a process example in which the current position of the camera-equipped drone 10 and the photographing process stop period are used as the mode switching determination condition.

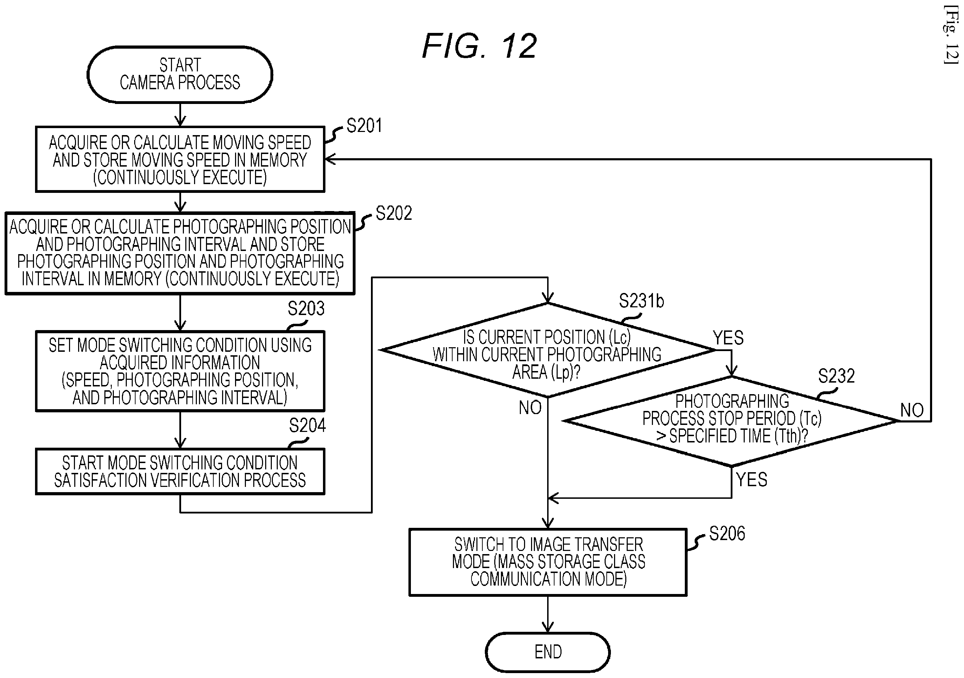

A processing sequence executed by the camera 30 in the second process example will be described with reference to a flowchart illustrated in Fig. 12.

The flowchart illustrated in Fig. 12 is a process flow similar to the process flow (steps S201 to S206) of the camera described above with reference to the flow on the right side of Fig. 7.

A process of steps S201 to S204 and step S206 in the flow illustrated in Fig. 12 is a process corresponding to the process of steps S201 to S204 and step S206 in the flow illustrated in Fig. 7.

A process of steps S231b and S232 of the flow illustrated in Fig. 12 corresponds to the process of step S205 of the flow illustrated in Fig. 7, and is the second process example, that is, a process executed in which the current position and the photographing process stop period are used as the mode switching determination condition.

A process of each step of the flow illustrated in Fig. 12 will be described.

### (Steps S201 to S204)

A process of steps S201 to S204 corresponds to the process of steps S201 to S204 described above with reference to Fig. 7.

These processes will be briefly described.

First, in step S201, the camera 30 acquires or calculates the moving speed of the camera 30 (= drone) and stores the moving speed in the memory.

Then, in step S202, the photographing position and the photographing interval are acquired or calculated in units of images photographed in the camera 30 and stored in the memory.

Then, in step S203, the mode switching condition is set using at least one of the acquired information (the speed, the photographing position, and the photographing interval) and such information.

In the present process example is a process example in a case where the camera-equipped drone 10 moves from a base station (base) 80 to a current photographing area 70 at a high speed, switches to the low-speed movement after arriving at the current photographing area 70, and photographs images at constant intervals while performing the low-speed movement in the current photographing area 70 as described above with reference to Fig. 9.

In the second process example, the photographing area information is stored in the memory 36 of the camera.

For example, in the example illustrated in Fig. 9, it is the area of the current photographing area 70, that is, a rectangular area from (latitude a, longitude b) to (latitude c, longitude d).

The camera 30 stores the photographing area information (the rectangular area information of (latitude a, longitude b) to (latitude c, longitude d)) in the memory 36 as the photographing area information.

In the second process example, the image photographing is performed only within a predetermined photographing area (the rectangular area of (latitude a, longitude b) to (latitude c, longitude d)).

Further, the image photographing is performed at constant intervals.

On the basis of these image photographing patterns, the camera 30 sets the following conditions as the condition for switching the image photographing mode to the image transfer mode:
(First condition) the position of the camera-equipped drone is outside the photographing area; and
(Second condition) the image photographing interval exceeds a certain time.

In a case where any one of the conditions is satisfied, the image photographing mode is switched to the image transfer mode.

In step S203, the mode switching condition is set.

Then, in step S204, the mode switching condition satisfaction verification process is started.

The mode switching condition is the switching condition from the image photographing mode which is the current setting mode of the camera to the image transfer mode.

The second process example is a process example in which the current position and the photographing process stop period are used as the mode switching determination condition, and this determination process is the process of steps S231b and S232.

These processes will be described.

### (Step S231b)

First, in step S231b, the camera 30 determines whether or not a current position (Lc) of the camera 30 is within a current photographing area (Lp).

Further, the current position (Lc) of the camera 30 coincides with the current position of the camera-equipped drone 10.

The camera 30 receives the photographing area information (Lp) from the drone main body control device 20 in advance and further periodically receives the position information acquired on the basis of the GPS by the drone main body control device 20.

For example, in the example illustrated in Fig. 9, the photographing area information (Lp) is the area of the current photographing area 70, that is, the rectangular area of (latitude a, longitude b) to (latitude c, longitude d).

The camera 30 compares the photographing area information (Lp = the rectangle area information of (latitude a, longitude b) to (latitude c, longitude d)) with the position information acquired on the basis of the GPS by the drone main body control device 20, and determines whether or not the current position (Lc) of the camera 30 is within the current photographing area (Lp).

In a case where it is determined that the current position (Lc) of the camera 30 is within the current photographing area (Lp), the process proceeds to step S232.

On the other hand, in a case where it is determined that the current position (Lc) of the camera 30 is outside the current photographing area (Lp), the process proceeds to step S205, and the switching process from the image photographing mode which is the current setting mode of the camera to the image transfer mode is executed.

### (Step S232)

In a case where it is determined in the determination process of step S231b that the current position (Lc) of the camera 30 is within the current photographing area (Lp), the process proceeds to step S232.

In step S232, the camera 30 determines whether or not the stop period (Tc) of the image photographing process exceeds the specified period (Tth) which is a prespecified threshold value.

As described above, the camera 30 photographs each image in accordance with the photographing execution command from the drone main body control device 20. In other words, in the image photographing mode, the camera 30 receives the command from drone main body control device 20 via a PTP communication session established as a communication session between the drone main body control device 20 and the camera 30, and performs the photographing.

The camera 30 measures the stop period of the input of the photographing command from the drone main body control device 20 through the timepiece unit 37 and determines whether or not the stop period of the input of the photographing command (= the stop period (Tc) of the image photographing process) exceeds the specified period (Tth) which is a prespecified threshold time.

In a case where it is determined that the stop period (Tc) of the image photographing process exceeds the specified period (Tth) which is the prespecified threshold time, the process proceeds to step S206, and the switching process from the image photographing mode which is the current setting mode of the camera to the image transfer mode is executed.

On the other hand, in a case where it is determined that the stop period (Tc) of the image photographing process does not exceed the specified period (Tth) which is the prespecified threshold time, the process returns to step S201.

### (Step S206)

In a case where it is determined in the determination process of steps S231b and S232 that the switching condition from the image photographing mode which is the current setting mode of the camera to the image transfer mode is satisfied, the process proceeds to step S206. In step S206, the camera control unit 31 of the camera 30 executes the switching process from the image photographing mode which is the current setting mode of the camera to the image transfer mode.

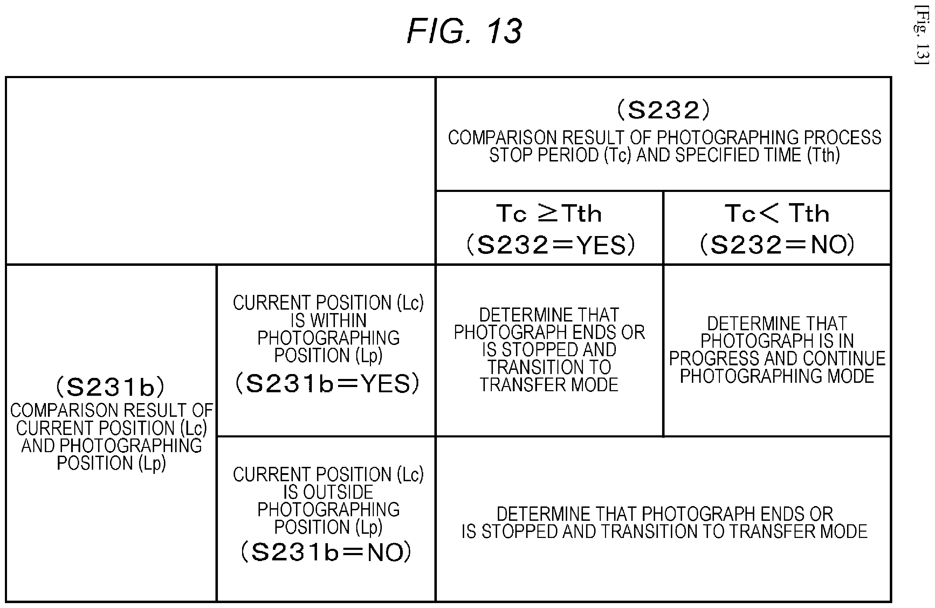

A correspondence relation between the determination processes of steps S231b and S232 and whether or not the mode switching is executed will be described with reference to Fig. 13.

Fig. 13 illustrates processes based on a combination of the following two determination steps (Yes/No):
on the left side, the determination process of step S231b, that is, the determination process of whether or not the current position (Lc) is within the current photographing area (Lp); and
on the upper side, the determination process of step S232, that is, the determination process of whether or not the photographing process stop period (Tc) exceeds the specified period (Tth).

As illustrated in Fig. 13, in a case where the determination process of step S231b on the left is Yes, that is, in a case where it is determined that the current position (Lc) is within the current photographing area (Lp), a process to be executed differs depending on the determination process result of step S232 as follows.

In a case where the determination result of step S232 is Yes, that is, in a case where it is determined that the photographing process stop period (Tc) exceeds the specified period (Tth),
it is determined that the photographing ends or is stopped, and the switching process from the image photographing mode which is the current setting mode of the camera to the image transfer mode.

On the other hand, in a case where the determination result of step S232 is No, that is, in a case where it is determined that the photographing process stop period (Tc) does not exceed the specified period (Tth),
it is determined that the photographing is in progress and the image photographing mode which is the current setting mode of the camera is continued.

In addition, in a case where the determination result of step S231b is No, that is, in a case where it is determined that the current position (Lc) is not within the current photographing area (Lp), the switching process from the image photographing mode which is the current setting mode of the camera to the image transfer mode is executed regardless of the determination process result of step S232.

As described above, after the mode switching of step S206, the drone main body control device 20 reads the photographed image data stored in the storage unit 35 of the camera 30 at a high speed in accordance with the communication protocol compatible with the mass storage class (MSC) and transmits the photographed image data to the user side device such as the PC on the ground.

With a series of processes described above, the user on the ground can immediately check the photographed image of the camera 30 in the sky.

### <4-3. (Third process example) process example in which only moving speed is used as mode switching determination condition>

Next, a process example in which only the moving speed is used as the mode switching determination condition will be described as a third process example.

The third process example is a process example usable in a case where the photographing process is performed under the condition that the image photographing is performed only in a case where the flying speed of the camera-equipped drone 10 is equal to or less than a certain speed.

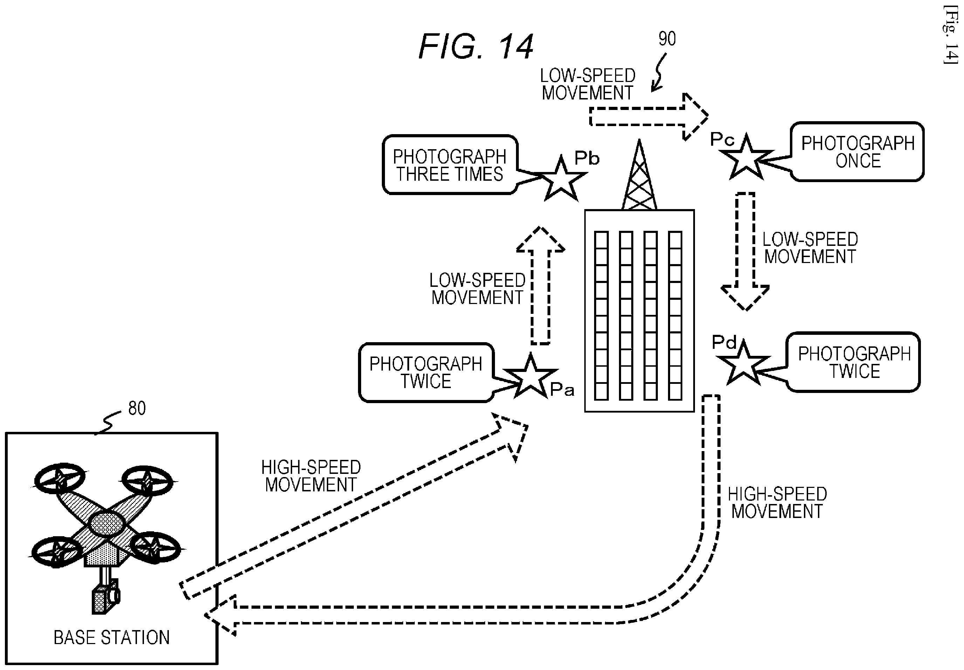

For example, a photographing object 90 is assumed to be specified in advance as illustrated in Fig. 14.

Further, it is assumed that Pa, Pb, Pc and Pd are specified as the photographing positions in advance, and the number of image photographing at each photographing position is also specified as illustrated in Fig. 14. The following setting is performed:
two images are photographed at the photographing position Pa;
three images are photographed at the photographing position Pb;
one image is photographed at the photographing position Pc; and
two images are photographed at the photographing position Pd,

The camera-equipped drone 10 moves from the base station (base) 80 to the photographable area of the photographing object 90 and performs the image photographing in accordance with a prespecified flight route at a prespecified position on the flight route.

Further, the movement route to the photographing object 90, the flight route around the photographing object 90, the photographing timing, and the like are all recorded in the program stored in the memory 26 of the drone main body control device 20.

The drone main body control device 20 sequentially outputs the position information to the camera 30, and outputs a photographing execution command or photographing setting information such as focus and zoom settings at a photographing execution timing of each image, and the camera 30 executes the photographing process according to the input information.

The camera-equipped drone 10 executes an image photographing process according to a pre-specified program at each of the photographing point Pa to Pd of the photographing object 90. If the image photographing is completed, the camera-equipped drone 10 moves to the base station (base) 80 and lands.

The third process example is a process example in which only the moving speed of camera-equipped drone 10 is used as the mode switching determination condition.

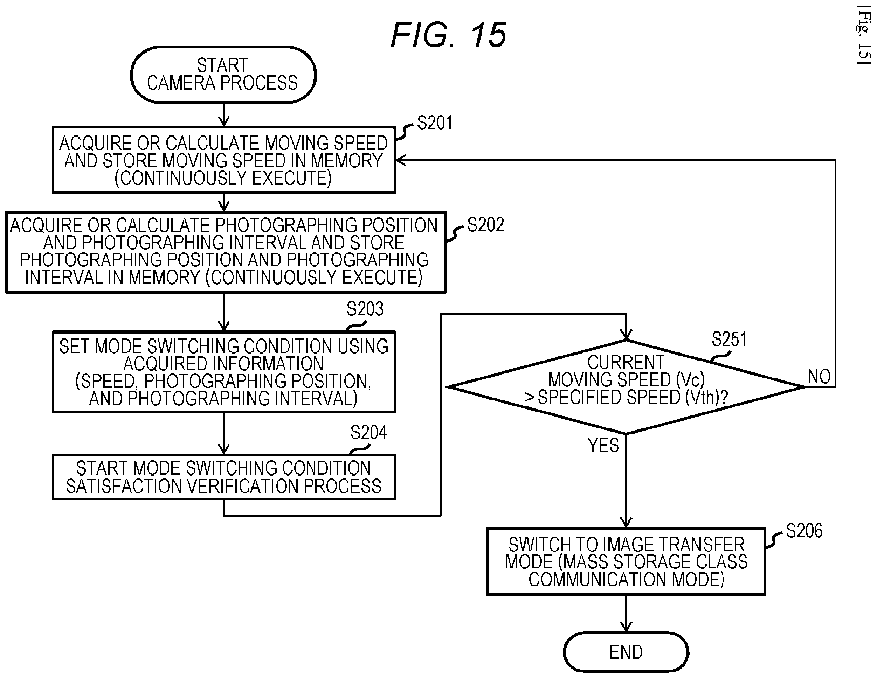

A processing sequence executed by the camera 30 in the third process example will be described with reference to a flowchart illustrated in Fig. 15.

The flowchart illustrated in Fig. 15 is a process flow similar to the process flow (steps S201 to S206) of the camera described above with reference to the flow on the right side of Fig. 7.

A process of steps S201 to S204 and step S206 in the flow illustrated in Fig. 15 is a process corresponding to the process of steps S201 to S204 and step S206 in the flow illustrated in Fig. 7.

The process of step S251 of the flow illustrated in Fig. 15 corresponds to the process of step S205 of the flow illustrated in Fig. 7, and is the third process example, that is, a process executed in which only the current moving speed is used as the mode switching determination condition.

A process of each step of the flow illustrated in Fig. 15 will be described.

### (Steps S201 to S204)

A process of steps S201 to S204 corresponds to the process of steps S201 to S204 described above with reference to Fig. 7.

These processes will be briefly described.

First, in step S201, the camera 30 acquires or calculates the moving speed of the camera 30 (= drone) and stores the moving speed in the memory.

Then, in step S202, the photographing position and the photographing interval are acquired or calculated in units of images photographed in the camera 30 and stored in the memory.

Then, in step S203, the mode switching condition is set using at least one of the acquired information (the speed, the photographing position, and the photographing interval) and such information.

The present process example is a process example in which the camera-equipped drone 10 moves from the base station (base) 80 to the photographing object 90 at a high speed, switches to the low-speed movement after arriving near the photographing object 90, and photographs an image of the photographing object 90 at a predetermined position as described above with reference to Fig. 14.

In this case, the camera 30 detects that the image is being photographed while performing the low-speed movement after switching to the low-speed movement or a stopped state. On the basis of this detection information, the camera 30 determines that image photographing is performed only at a predetermined moving speed or less and determines that the image photographing pattern has the following setting:
the image photographing is performed while moving at a certain speed or less or in a stopped state.

On the basis of the image photographing pattern, the following conditions are set as the condition for switching the image photographing mode to the image transfer mode:
(first condition) the camera-equipped drone starts the high-speed movement.

In a case where any one of the conditions is satisfied, the image photographing mode is switched to the image transfer mode. In step S203, the mode switching condition is set.

Then, in step S204, the mode switching condition satisfaction verification process is started.

The mode switching condition is the switching condition from the image photographing mode which is the current setting mode of the camera to the image transfer mode.

The third process example is a process example in which the current moving speed is used as the mode switching determination condition, and this determination process is the process of step S251. This process will be described.

### (Step S251)

First, in step S251, the camera 30 determines whether or not the current moving speed (Vc) of the camera 30 exceeds a specified speed (Vth).

Further, the current moving speed (Vc) of the camera 30 is equal to the current moving speed of the camera-equipped drone 10.

The specified speed (Vth) information used as a threshold value is, for example, a speed between a speed at the time of high-speed movement from the base station 80 illustrated in Fig. 14 to the photographing object 90 and a speed at the time of low-speed movement after the photographing is started.

The specified speed (Vth) information used as a threshold value is stored in the memory 36 of the camera 30 in advance. For example, the specified speed (Vth) information is stored when the mode switching condition is set in step S203.

Further, the camera 30 sequentially calculates a current speed (Vc) of the camera 30 (= drone) using the GPS position information or the like input from the drone main body control device 20.

Using such information, the camera 30 determines whether or not the current moving speed (Vc) of the camera 30 exceeds the specified speed (Vth).

In a case where it is determined that the current moving speed (Vc) of the camera 30 does not exceed the specified speed (Vth), the process returns to step S201.

On the other hand, in a case where it is determined that the current moving speed (Vc) of the camera 30 exceeds the specified speed (Vth), the process proceeds to step S206, and the switching process from the image photographing mode which is the current setting mode of the camera to the image transfer mode is executed.

### (Step S206)

In a case where it is determined in the determination process of step S251 that the switching condition from the image photographing mode which is the current setting mode of the camera to the image transfer mode is satisfied, the process proceeds to step S206. In step S206, the camera control unit 31 of the camera 30 executes the switching process from the image photographing mode which is the current setting mode of the camera to the image transfer mode.

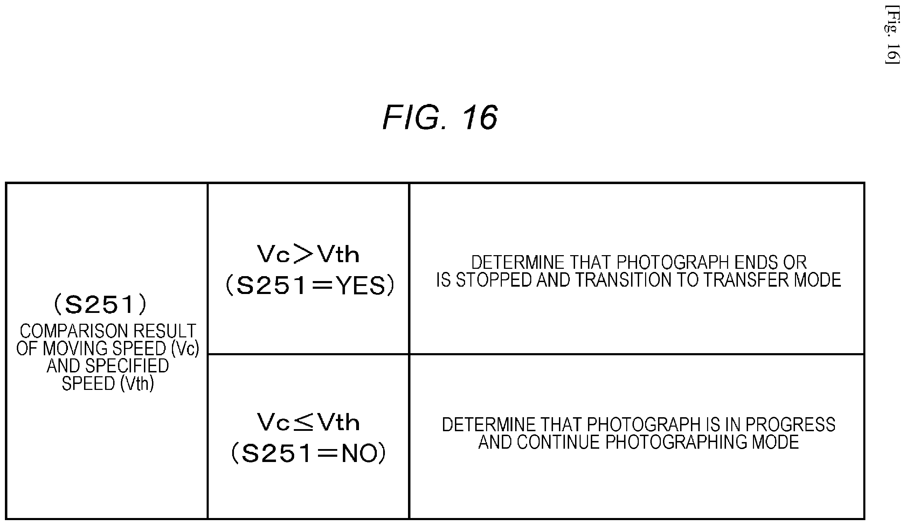

A correspondence relation between the determination process of step S251 and whether or not the mode switching is executed will be described with reference to Fig. 16.

Fig. 16 illustrates processes based on a combination of the following one determination steps (Yes/No):
on the left side, the determination process of step S251, that is, the determination process of whether or not the current moving speed (Vc) exceeds the specified speed (Vth).

As illustrated in Fig. 16, in a case where it is determined that the determination process of step S251 on the left is Yes, that is, in a case where it is determined that the current moving speed (Vc) exceeds the specified speed (Vth), the switching process from the image photographing mode which is the current setting mode of the camera to the image transfer mode is executed.

On the other hand, in a case where it is determined that the determination process of step S251 on the left is No, that is, in a case where it is determined that the current moving speed (Vc) does not exceed the specified speed (Vth), it is determined that the photographing is in progress, and the image photographing mode which is the current setting mode of the camera is continued.

As described above, after the mode switching of step S206, the drone main body control device 20 reads the photographed image data stored in the storage unit 35 of the camera 30 at a high speed in accordance with the communication protocol compatible with the mass storage class (MSC) and transmits the photographed image data to the user side device such as the PC on the ground.

With a series of processes described above, the user on the ground can immediately check the photographed image of the camera 30 in the sky.

Note that, in addition to the above-described three process examples, that is, the following process examples:
(first process example) a process example in which the moving speed and the photographing process stop period are used as a mode switching determination condition;
(second process example) a process example in which the current position and the photographing process stop period are used as the mode switching determination condition; and
(third process example) a process example in which the moving speed is used as the mode switching determination condition.

The mode switching determination condition can be variously set in addition to the above process examples.

For example, it is possible to set at least one of the moving speed, the photographing process stop period, and the current position as the mode switching determination condition, and it is also possible to set an arbitrary combination of the moving speed, the photographing process stop period, and the current position as the mode switching determination condition.

For example, in the configuration in which only the photographing process stop period is used as the mode switching determination condition, in a case where the photographing process stop period of the specified period or more occurs, switching from the image photographing mode to the image transfer mode is executed.

Further, in the configuration in which only the current position is used as the mode switching determination condition, in a case where the current position deviates from a preset photographing area, switching from the image photographing mode to the image transfer mode is executed.

Such a setting is performed.

### Industrial Applicability

As described above, according to a configuration of an embodiment of the present disclosure, a configuration in which switching between an image photographing mode and an image transfer mode is performed in accordance with whether or not a mode switching condition is satisfied, and communication according to a different communication protocol is performed in each mode is implemented.

Specifically, for example, a control unit which executes mode switching between the image photographing mode and the image transfer mode is provided, and the control unit determines whether or not a prespecified mode switching condition is satisfied and executes a process of performing switching from the image photographing mode to the image transfer mode in a case where the mode switching condition is satisfied. In the image photographing mode, communication according to a picture transfer protocol (PTP) is executed with a connected drone main body control device, and in the image transfer mode, communication according to a mass storage class (MSC) is executed with the connected drone main body control device.

With the present configuration, the configuration in which switching between the image photographing mode and the image transfer mode is performed in accordance with whether or not the mode switching condition is satisfied, and the communication according to the different communication protocol is performed in each mode is implemented.

It should be understood by those skilled in the art that various modifications, combinations, sub-combinations and alterations may occur depending on design requirements and other factors insofar as they are within the scope of the appended claims

### Reference Signs List

- 10: Camera-equipped drone
- 20: Drone main body control device
- 21: Main body control unit
- 22: Flight control unit
- 23: Camera communication unit
- 24: External device communication unit
- 25: Sensor
- 26: Memory
- 27: Timepiece unit
- 28: Power supply unit
- 30: Camera
- 31: Camera control unit
- 32: Lens unit
- 33: Imaging element
- 34: Image processing unit
- 35: Storage unit
- 36: Memory
- 37: Timepiece unit
- 38: Communication unit

## Claims

1. An imaging device (30) of a reconnaissance vehicle (10), the imaging device comprising
an image capturing unit (32, 33, 34) configured when activated to capture photographic or video images of a photographic area,
a storage unit (35) configured to store the photographic or video images generated by the imaging device, and
a control unit (31) configured to communicate via a universal serial bus, USB, interface with a control body unit (20) of the reconnaissance vehicle, the control unit being configured to operate in an image photographing mode in which the control unit is configured to receive control information from the control body unit of the reconnaissance vehicle via the USB interface in accordance with a picture transfer protocol, PTP, and in an image transfer mode in which the control unit is configured to transfer the photographic or video images from the storage unit to the control body unit of the reconnaissance vehicle via the USB interface in accordance with a mass storage class, MSC, protocol, wherein the control unit is configured in response to detecting mode switching conditions after the imaging device has captured one or more photographic images or video images of a photographic area to switch autonomously from the image photographing mode to the image transfer mode to transfer the one or more photographic or video images to the control body unit of the reconnaissance vehicle, wherein the mode switching conditions comprise one or more of a position of the reconnaissance vehicle, a speed of the reconnaissance vehicle, and an image photographing interval of the imaging device.

2. An imaging device as claimed in Claim 1, wherein the control information received from the control body unit of the reconnaissance vehicle via the USB interface includes an indication from which a speed of the reconnaissance vehicle can be determined, and the mode switching condition includes a condition that the reconnaissance vehicle has a current speed within a predetermined range or above a predetermined value.

3. An imaging device as claimed in Claim 2, wherein the control unit is configured in response to detecting, from the control information, that the reconnaissance vehicle has exceeded a predetermined speed to switch from the image photographing mode to the image transfer mode.

4. An imaging device as claimed in Claim 1, wherein the control information includes position information which provides an indication of a position of the reconnaissance vehicle, and the control unit is configured to detect the mode switching condition to switch from the image photographing mode based on the position information.

5. An imaging device as claimed in Claim 4, wherein the control unit is configured to detect the mode switching condition based on the position information by detecting, after capturing the images or video from the photographic area or a predetermined location in the image photographing mode that the imaging device has left the photographic area or the predetermined location.

6. An imaging device as claimed in Claim 5, wherein the control unit includes a memory having stored therein location information representing a location of the photographic area or the predetermined location for the imaging device to capture the video or photographic images, and the control unit is responsive to the position indication information provided from the control body unit of the reconnaissance vehicle when in the imaging photographing mode to detect that the imaging device has left the photographic area or the predetermined location to switch to the image transfer mode.

7. An imaging device as claimed in Claim 1, comprising a timepiece unit wherein the imaging device is configured to monitor, using the timepiece unit a time in which the imaging device spends in the image photographic mode, and the mode switching condition include a time spent in the image photographic mode.

8. An imaging device as claimed in Claim 7, wherein the control unit is configured to monitor using the timepiece unit a time in which the image device is in the image photographic mode, and if the time in the image photographing mode exceeds a predetermined threshold after capturing the photographic or video images, the control unit is configured to switch to the image transfer mode.

9. An imaging device as claimed in Claim 7, wherein the control unit is configured to monitor using the timepiece unit a time in which the control unit is in the imaging photographic mode and the image capturing unit has stopped capturing the photographic or video images, and if the time in the image photographic mode since the image capturing unit has stopped capturing the photographic or video images exceeds a predetermined threshold, the control unit is configured to switch to the image transfer mode.

10. A reconnaissance vehicle (10) comprising
one or more propulsion units configured to propel the reconnaissance vehicle,
a control body unit (20) configured to control the one or more propulsion units to move the reconnaissance vehicle to a desired location, and
an imaging device (30) connected to the control body unit by a universal serial bus, USB, interface the imaging device being configured when activated to generate photographic or video images of a photographic area, and to operate in an image photographing mode in which the imaging device is configured to receive control information from the control body unit via the USB interface in accordance with a picture transfer protocol, PTP, and in an image transfer mode in which the imaging device is configured to transfer the photographic or video images from the imaging device to the control body via the USB interface in accordance with a mass storage class, MSC, protocol, wherein in response to mode switching conditions being detected by one or both of the control body or the imaging device after the imaging device has captured the images or video of the photographic area to switch autonomously from the image photographing mode to the image transfer mode, wherein the mode switching conditions comprise one or more of a position of the reconnaissance vehicle, a speed of the reconnaissance vehicle, and an image photographing interval of the imaging device.

11. A reconnaissance vehicle as claimed in Claim 10, wherein the control body unit includes a position detection sensor configured to generate an estimate of a position of the reconnaissance vehicle and the control information communicated to the imaging device via the USB interface includes the indication of the position of the reconnaissance vehicle to the imaging device when the imaging device is in the image photographing mode, and the imaging device is configured to detect the mode switching condition based on the position information and to switch from the image photographing mode to the image transfer mode.

12. A reconnaissance vehicle as claimed in Claim 11, wherein the control body includes a memory having stored therein location information representing a location of the photographic area for the imaging device to capture images, and a control unit configured to compare the position indication information provided from the position sensor with the location information stored in the memory to generate an indication included in the control information communicated via the USB interface to switch from the image photographing mode to the image transfer mode as a result of the comparison indicating the mode switching condition.

13. A method of operating an imaging device (30) of a reconnaissance vehicle (10) to generate photographic or video images from the reconnaissance vehicle, the method comprising
operating the imaging device in either an image photographic mode or an image transfer mode, the image photographic mode comprising
receiving control information at the imaging device from a control body unit (20) of the reconnaissance vehicle via a universal serial bus, USB, interface in accordance with a picture transfer protocol, PTP, to control the imaging device,
capturing the photographic or video images of a photographic area, and
storing the photographic or video images in a storage unit (35), and the image transfer mode comprises
transferring the photographic or video images from the storage unit to the control body unit of the reconnaissance vehicle via the USB interface in accordance with a mass storage class, MSC, protocol, wherein the method comprises
detecting mode switching conditions indicating that the imaging device should switch from the image photographing mode to the image transfer mode after capturing one or more photographic images or video images of the photographic area, and
switching autonomously the imaging device from the image photographing mode to the image transfer mode to transfer the one or more photographic or video images to the control body unit of the reconnaissance vehicle,
wherein the mode switching conditions comprise one or more of a position of the reconnaissance vehicle, a speed of the reconnaissance vehicle, and an image photographing interval of the imaging device.

14. A computer program comprising computer executable instructions which, when loaded onto a data processor causes the data processor to perform the method according to Claim 13.

15. A computer program product comprising a computer readable medium having recorded thereon the computer program of claim 14.

## Patentansprüche

1. Bildgebungsvorrichtung (30) eines Aufklärungsfahrzeugs (10), wobei die Bildgebungsvorrichtung umfasst:
eine Bildaufnahmeeinheit (32, 33, 34), die ausgelegt ist, um bei Aktivierung Foto- oder Videobilder eines fotografischen Bereichs aufzunehmen,
eine Ablageeinheit (35), die ausgelegt ist zum Ablegen der durch die Bildgebungsvorrichtung erzeugten Foto- oder Videobilder, und
eine Steuereinheit (31), die ausgelegt ist zum Kommunizieren über eine USB-(Universal Serial Bus)Schnittstelle mit einer Steuerkörpereinheit (20) des Aufklärungsfahrzeugs, wobei die Steuereinheit ausgelegt ist zum Arbeiten in einem Bildfotografiermodus, in dem die Steuereinheit ausgelegt ist zum Empfangen von Steuerinformationen von der Steuerkörpereinheit des Aufklärungsfahrzeugs über die USB-Schnittstelle gemäß einem Bildtransferprotokoll, PTP, und in einem Bildtransfermodus, in dem die Steuereinheit ausgelegt ist zum Transferieren der Fotooder Videobilder von der Ablageeinheit zu der Steuerkörpereinheit des Aufklärungsfahrzeugs über die USB-Schnittstelle gemäß einem Massenspeicherklassen-, MSC-, Protokoll, wobei die Steuereinheit ausgelegt ist, als Reaktion auf das Detektieren von Modusumschaltbedingungen, nachdem die Bildgebungsvorrichtung ein oder mehrere Fotobilder oder Videobilder eines fotografischen Bereichs aufgenommen hat, autonom von dem Bildfotografiermodus zu dem Bildtransfermodus umzuschalten, um das eine oder die mehreren Foto- oder Videobilder zu der Steuerkörpereinheit des Aufklärungsfahrzeugs zu transferieren, wobei die Modusumschaltbedingungen einen oder mehrere einer Position des Aufklärungsfahrzeugs, einer Geschwindigkeit des Aufklärungsfahrzeugs und eines Bildfotografierintervalls der Bildgebungsvorrichtung umfassen.

2. Bildgebungsvorrichtung nach Anspruch 1, wobei die von der Steuerkörpereinheit des Aufklärungsfahrzeugs über die USB-Schnittstelle enthaltenen Steuerinformationen eine Anzeige enthalten, anhand derer eine Geschwindigkeit des Aufklärungsfahrzeugs bestimmt werden kann, und die Modenumschaltbedingung eine Bedingung enthält, dass das Aufklärungsfahrzeug eine aktuelle Geschwindigkeit innerhalb eines vorbestimmten Bereichs oder über einem vorbestimmten Wert aufweist.

3. Bildgebungsvorrichtung nach Anspruch 2, wobei die Steuereinheit ausgelegt ist als Reaktion auf das Detektieren, anhand der Steuerinformationen, dass das Aufklärungsfahrzeug eine vorbestimmte Geschwindigkeit überschritten hat, um von dem Bildfotografiermodus zu dem Bildtransfermodus umzuschalten.

4. Bildgebungsvorrichtung nach Anspruch 1, wobei die Steuerinformationen Positionsinformationen enthalten, die eine Anzeige einer Position des Aufklärungsfahrzeugs liefern, und die Steuereinheit ist ausgelegt zum Detektieren der Modusumschaltbedingung zum Umschalten von dem Bildfotografiermodus auf Basis der Positionsinformationen.

5. Bildgebungsvorrichtung nach Anspruch 4, wobei die Steuereinheit ausgelegt ist zum Detektieren der Modusumschaltbedingung auf Basis der Positionsinformationen durch Detektieren, nach Aufnehmen der Bilder oder von Video von dem fotografischen Bereich oder einem vorbestimmten Ort in dem Bildfotografiermodus, dass die Bildgebungsvorrichtung den fotografischen Bereich oder den vorbestimmten Ort verlassen hat.

6. Bildgebungsvorrichtung nach Anspruch 5, wobei die Steuereinheit einen Speicher mit darin gelagerten Ortsinformationen enthält, die einen Ort des fotografischen Bereichs oder des vorbestimmten Orts für die Bildgebungsvorrichtung darstellen, um die Videooder Fotobilder aufzunehmen, und die Steuereinheit reagiert auf die von der Steuerkörpereinheit des Aufklärungsfahrzeugs gelieferten Positionsanzeigeinformationen wenn in dem Bildfotografiermodus, um zu detektieren, dass die Bildgebungsvorrichtung den fotografischen Bereich oder den vorbestimmten Ort verlassen hat, um zu dem Bildtransfermodus umzuschalten.

7. Bildgebungsvorrichtung nach Anspruch 1, umfassend eine Zeitmessereinheit, wobei die Bildgebungsvorrichtung ausgelegt ist zum Überwachen, unter Verwendung der Zeitmessereinheit einer Zeit, in der die Bildgebungsvorrichtung in dem Bildfotografiermodus verbringt, und die Modusumschaltbedingung eine in dem Bildfotografiermodus verbrachte Zeit enthält.

8. Bildgebungsvorrichtung nach Anspruch 7, wobei die Steuereinheit ausgelegt ist zum Überwachen unter Verwendung der Zeitmessereinheit einer Zeit, in der sich die Bildvorrichtung in dem Bildfotografiermodus befindet, und falls die Zeit in dem Bildfotografiermodus einen vorbestimmten Schwellwert nach dem Aufnehmen der Foto- oder Videobilder übersteigt, die Steuereinheit ausgelegt ist zum Umschalten zu dem Bildtransfermodus.

9. Bildgebungsvorrichtung nach Anspruch 7, wobei die Steuereinheit ausgelegt ist zum Überwachen unter Verwendung der Zeitmessereinheit einer Zeit, in der sich die Steuereinheit in dem Bildgebungsfotografiermodus befindet und die Bildaufnahmeeinheit das Aufnehmen der Foto- oder Videobilder angehalten hat, und falls die Zeit in dem Bildfotografiermodus seit die Bildaufnahmeeinheit das Aufnehmen der Foto- oder Videobilder angehalten hat, einen vorbestimmten Schwellwert übersteigt, die Steuereinheit ausgelegt ist zum Umschalten zu dem Bildtransfermodus.

10. Aufklärungsfahrzeug (10), umfassend
eine oder mehrere Antriebseinheiten, die ausgelegt sind zum Antreiben des Aufklärungsfahrzeugs,
eine Steuerkörpereinheit (20), die ausgelegt ist zum Steuern der einen oder mehreren Antriebseinheiten zum Bewegen des Aufklärungsfahrzeugs zu einem gewünschten Ort, und
eine Bildgebungsvorrichtung (30), die mit der Steuerkörpereinheit durch eine USB-, Universal Serial Bus-, Schnittstelle verbunden ist, wobei die Bildgebungsvorrichtung ausgelegt ist, bei Aktivierung, zum Erzeugen von Foto- oder Videobildern eines fotografischen Bereichs und zum Arbeiten in einem Bildfotografiermodus, in dem die Bildgebungsvorrichtung ausgelegt ist zum Empfangen von Steuerinformationen von der Steuerkörpereinheit über die USB-Schnittstelle gemäß einem Bildtransferprotokoll, PTP, und in einem Bildtransfermodus, in dem die Bildgebungsvorrichtung ausgelegt ist zum Transferieren der Foto- oder Videobilder von der Bildgebungsvorrichtung zu dem Steuerkörper über die USB-Schnittstelle gemäß einem Massenspeicherklassen-, MSC-, Protokoll, wobei als Reaktion auf das Detektieren von Modusumschaltbedingungen durch einen oder beide des Steuerkörpers oder der Bildgebungsvorrichtung nachdem die Bildgebungsvorrichtung die Bilder oder ein Video des fotografischen Bereichs aufgenommen hat, zum autonomen Umschalten von dem Bildfotografiermodus zu dem Bildtransfermodus, wobei die Modusumschaltbedingungen einen oder mehrere einer Position des Aufklärungsfahrzeugs, einer Geschwindigkeit des Aufklärungsfahrzeugs und eines Bildfotografierintervalls der Bildgebungsvorrichtung umfassen.

11. Aufklärungsfahrzeug nach Anspruch 10, wobei die Steuerkörpereinheit einen Positionsdetektionssensor enthält, der ausgelegt ist zum Erzeugen einer Schätzung einer Position des Aufklärungsfahrzeugs, und die zu der Bildgebungsvorrichtung über die USB-Schnittstelle kommunizierten Steuerinformationen die Anzeige der Position des Aufklärungsfahrzeugs zu der Bildgebungsvorrichtung enthalten, wenn sich die Bildgebungsvorrichtung in dem Bildfotografiermodus befindet, und die Bildgebungsvorrichtung ausgelegt ist zum Detektieren der Modusumschaltbedingung auf Basis der Positionsinformationen und zum Umschalten von dem Bildfotografiermodus zu dem Bildtransfermodus.

12. Aufklärungsfahrzeug nach Anspruch 11, wobei der Steuerkörper einen Speicher mit darin gespeicherten Ortsinformationen enthält, die einen Ort des fotografischen Bereichs für die Bildgebungsvorrichtung zum Aufnehmen von Bildern darstellt, und eine Steuereinheit, die ausgelegt ist zum Vergleichen der von dem Positionssensor gelieferten Positionsanzeigeinformationen mit den in dem Speicher gespeicherten Ortsinformationen zum Erzeugen einer Anzeige, die in den über die USB-Schnittstelle kommunizierten Steuerinformationen enthalten ist, zum Umschalten von dem Bildfotografiermodus zu dem Bildtransfermodus infolge des Vergleichs, der die Modusumschaltbedingung anzeigt.

13. Verfahren zum Betreiben einer Bildgebungsvorrichtung (30) eines Aufklärungsfahrzeugs (10) zum Erzeugen von Foto- oder Videobildern von dem Aufklärungsfahrzeug, wobei das Verfahren umfasst:
Betreiben der Bildgebungsvorrichtung entweder in einem Bildfotografiermodus oder einem Bildtransfermodus, wobei der Bildfotografiermodus umfasst:
Empfangen von Steuerinformationen an der Bildgebungsvorrichtung von einer Steuerkörpereinheit (20) des Aufklärungsfahrzeugs über eine USB-, Universal Serial Bus, Schnittstelle, gemäß einem Bildtransferprotokoll, PTP, zum Steuern der Bildgebungsvorrichtung,
Aufnehmen der Foto- oder Videobilder eines fotografischen Bereichs, und
Speichern der Foto- oder Videobilder in einer Ablageeinheit (35), und der Bildtransfermodus umfasst:
Transferieren der Foto- oder Videobilder von der Ablageeinheit zu der Steuerkörpereinheit des Aufklärungsfahrzeugs über die USB-Schnittstelle gemäß einem Massenspeicherklassen-, MSC-, Protokoll, wobei das Verfahren umfasst:
Detektieren von Modusumschaltbedingungen, die anzeigen, dass die Bildgebungseinrichtung von dem Bildfotografiermodus zu dem Bildtransfermodus nach dem Aufnehmen eines oder mehrerer Fotobilder oder Videobilder des fotografischen Bereichs umschalten sollte, und
autonomes Umschalten der Bildgebungsvorrichtung von dem Bildfotografiermodus zu dem Bildtransfermodus zum Transferieren des einen oder der mehreren Foto- oder Videobilder zu der Steuerkörpereinheit des Aufklärungsfahrzeugs,
wobei die Modusumschaltbedingungen einen oder mehrere einer Position des Aufklärungsfahrzeugs, einer Geschwindigkeit des Aufklärungsfahrzeugs und eines Bildfotografierintervalls der Bildgebungsvorrichtung umfassen.

14. Computerprogramm, umfassend computerausführbare Anweisungen, die bei Laden in einen Datenprozessor bewirken, dass der Datenprozessor das Verfahren nach Anspruch 13 durchführt.

15. Computerprogrammprodukt, umfassend ein comuterlesbares Medium mit dem darauf gespeicherten Computerprogramm von Anspruch 14.

## Revendications

1. Dispositif d'imagerie (30) d'un véhicule de reconnaissance (10), le dispositif d'imagerie comprenant
une unité de capture d'images (32, 33, 34) configurée, lorsqu'elle est activée, pour capturer des images photographiques ou vidéo d'une zone photographique,
une unité de stockage (35) configurée pour stocker les images photographiques ou vidéo générées par le dispositif d'imagerie, et
une unité de commande (31) configurée pour communiquer, via une interface bus série universel, USB, avec une unité de corps de commande (20) du véhicule de reconnaissance, l'unité de commande étant configurée pour fonctionner dans un mode de photographie d'images dans lequel l'unité de commande est configurée pour recevoir des informations de commande depuis l'unité de corps de commande du véhicule de reconnaissance via l'interface USB conformément à un protocole de transfert d'images, PTP, et dans un mode de transfert d'images dans lequel l'unité de commande est configurée pour transférer les images photographiques ou vidéo depuis l'unité de stockage vers l'unité de corps de commande du véhicule de reconnaissance via l'interface USB conformément à un protocole de classe de stockage de masse, MSC, l'unité de commande étant configurée, en réponse à la détection de conditions de commutation de mode, suite à la capture, par le dispositif d'imagerie, d'une ou de plusieurs images photographiques ou images vidéo d'une zone photographique, pour commuter de manière autonome du mode de photographie d'images sur le mode de transfert d'images pour transférer les une ou plusieurs images photographiques ou vidéo vers l'unité de corps de commande du véhicule de reconnaissance, les conditions de commutation de mode comprenant une position du véhicule de reconnaissance et/ou une vitesse du véhicule de reconnaissance et/ou un intervalle de photographie d'images du dispositif d'imagerie.

2. Dispositif d'imagerie selon la revendication 1, dans lequel les informations de commande reçues depuis l'unité de corps de commande du véhicule de reconnaissance via l'interface USB comportent une indication permettant de déterminer une vitesse du véhicule de reconnaissance, et la condition de commutation de mode comporte une condition que le véhicule de reconnaissance possède une véhicule courante qui s'inscrit dans une plage prédéterminée ou qui est supérieure à une valeur prédéterminée.

3. Dispositif d'imagerie selon la revendication 2, dans lequel l'unité de commande est configurée, en réponse à la détection, à partir des informations de commande, que le véhicule de reconnaissance a dépassé une vitesse prédéterminée, pour commuter du mode de photographie d'images sur le mode de transfert d'images.

4. Dispositif d'imagerie selon la revendication 1, dans lequel les informations de commande comportent des informations de position qui fournissent une indication d'une position du véhicule de reconnaissance, et l'unité de commande est configurée pour détermine la condition de commutation de mode pour commuter du mode de photographie d'images sur la base des informations de position.

5. Dispositif d'imagerie selon la revendication 4, dans lequel l'unité de commande est configurée pour détecter la condition de commutation de mode sur la base des informations de position en détectant, suite à la capture des images ou de la vidéo à partir de la zone photographique ou d'un emplacement prédéterminé dans le mode de photographie d'images, que le dispositif d'imagerie a quitté la zone photographique ou l'emplacement prédéterminé.

6. Dispositif d'imagerie selon la revendication 5, dans lequel l'unité de commande comporte une mémoire dans laquelle sont stockées des informations d'emplacement représentant un emplacement de la zone photographique ou l'emplacement prédéterminé pour que le dispositif d'imagerie capture les images vidéo ou photographiques, et l'unité de commande, en réponse aux informations d'indication de position fournies par l'unité de corps de commande du véhicule de reconnaissance lorsqu'elle se trouve dans le mode de photographie d'imagerie, détecte que le dispositif d'imagerie a quitté la zone photographique ou l'emplacement prédéterminé pour commuter sur le mode de transfert d'images.

7. Dispositif d'imagerie selon la revendication 1, comprenant une unité chronomètre, le dispositif d'imagerie étant configuré pour surveiller, au moyen de l'unité chronomètre, un temps passé par le dispositif d'imagerie dans le mode photographique d'images, et la condition de commutation de mode comporte un temps passé dans le mode photographique d'images.

8. Dispositif d'imagerie selon la revendication 7, dans lequel l'unité de commande est configurée pour surveiller, au moyen de l'unité chronomètre, un temps passé par le dispositif d'imagerie dans le mode photographique d'images et, si le temps dans le mode de photographie d'images dépasse un seuil prédéterminée suite à la capture des images photographiques ou vidéo, l'unité de commande est configurée pour commuter sur le mode de transfert d'images.

9. Dispositif d'imagerie selon la revendication 7, dans lequel l'unité de commande est configurée pour surveiller, au moyen de l'unité chronomètre, un temps passé par l'unité de commande dans le mode photographique d'imagerie et au cours duquel l'unité de capture d'images a cessé de capturer les images photographiques ou vidéo et, si le temps dans le mode photographique d'images depuis que l'unité de capture d'images a cessé de capturer les images photographiques ou vidéo dépasse un seuil prédéterminé, l'unité de commande est configurée pour commuter sur le mode de transfert d'images.

10. Véhicule de reconnaissance (10) comprenant
une ou plusieurs unités de propulsion configurées pour propulser le véhicule de reconnaissance,
une unité de corps de commande (20) configurée pour commander les une ou plusieurs unités de propulsion pour amener le véhicule de reconnaissance à un emplacement souhaité, et
un dispositif d'imagerie (30) connecté à l'unité de corps de commande par une interface bus série universel, USB, le dispositif d'imagerie étant configuré, lorsqu'il est activé, pour générer des images photographiques ou vidéo d'une zone photographique, et pour fonctionner dans un mode de photographie d'images dans lequel le dispositif d'imagerie est configuré pour recevoir des informations de commande depuis l'unité de corps de commande via l'interface USB conformément à un protocole de transfert d'images, PTP, et dans un mode de transfert d'images dans lequel le dispositif d'imagerie est configuré pour transférer les images photographiques ou vidéo depuis le dispositif d'imagerie vers l'unité de corps de commande du véhicule de reconnaissance via l'interface USB conformément à un protocole de classe de stockage de masse, MSC ; en réponse à la détection, par le corps de commande et/ou le dispositif d'imagerie, de conditions de commutation de mode, suite à la capture, par le dispositif d'imagerie, des images ou de la vidéo de la zone photographique, pour commuter de manière autonome du mode de photographie d'images sur le mode de transfert d'images, les conditions de commutation de mode comprenant une position du véhicule de reconnaissance et/ou une vitesse du véhicule de reconnaissance et/ou un intervalle de photographie d'images du dispositif d'imagerie.

11. Véhicule de reconnaissance selon la revendication 10, dans lequel l'unité de corps de commande comporte un capteur de détection de position configuré pour générer une estimation d'une position du véhicule de reconnaissance, et les informations de commande communiquées au dispositif d'imagerie via l'interface USB comportent l'indication de la position du véhicule de reconnaissance au dispositif d'imagerie lorsque le dispositif d'imagerie se trouve dans le mode de photographie d'images, et le dispositif d'imagerie est configuré pour détecter la condition de commutation de mode sur la base des informations de position et pour commuter du mode de photographie d'images sur le mode de transfert d'images.

12. Véhicule de reconnaissance selon la revendication 11, dans lequel le corps de commande comporte une mémoire dans laquelle sont stockées des informations d'emplacement représentant un emplacement de la zone photographique pour que le dispositif d'imagerie capture des images, et une unité de commande configurée pour comparer les informations d'indication de position fournies par le capteur de position aux informations d'emplacement stockées dans la mémoire pour générer une indication incorporée dans les informations de commande communiquées via l'interface USB pour commuter du mode de photographie d'images sur le mode de transfert d'images dès lors que la comparaison indique la condition de commutation de mode.

13. Procédé de fonctionnement d'un dispositif d'imagerie (30) d'un véhicule de reconnaissance afin de générer des images photographiques ou vidéo à partir du véhicule de reconnaissance, le procédé comprenant
le fonctionnement du dispositif d'imagerie soit dans un mode photographique d'images soit dans un mode de transfert d'images, le mode photographique d'images comprenant
la réception d'informations de commande au niveau du dispositif d'imagerie depuis une unité de corps de commande (20) du véhicule de reconnaissance via une interface bus série universel, USB, conformément à un protocole de transfert d'images, PTP, pour commander le dispositif d'imagerie,
la capture des images photographiques ou vidéo d'une zone photographique, et
le stockage des images photographiques ou vidéo dans une unité de stockage (35), et le mode de transfert d'images comprenant
le transfert des images photographiques ou vidéo depuis l'unité de stockage vers l'unité de corps de commande du véhicule de reconnaissance via l'interface USB conformément à un protocole de classe de stockage de masse, MSC, le procédé comprenant
la détection de conditions de commutation de mode indiquant que le dispositif d'imagerie doit commuter du mode de photographie d'images sur le mode de transfert d'images après avoir capturé une ou de plusieurs images photographiques ou images vidéo de la zone photographique, et
la commutation autonome du dispositif d'imagerie du mode de photographie d'images sur le mode de transfert d'images pour transférer les une ou plusieurs images photographiques ou vidéo vers l'unité de corps de commande du véhicule de reconnaissance,
les conditions de commutation de mode comprenant une position du véhicule de reconnaissance et/ou une vitesse du véhicule de reconnaissance et/ou un intervalle de photographie d'images du dispositif d'imagerie.

14. Programme d'ordinateur comprenant des instructions exécutables par ordinateur qui, lorsqu'elles sont chargées sur un processeur de données, amènent le processeur de données à réaliser le procédé selon la revendication 13.

15. Produit-programme d'ordinateur comprenant un support lisible par ordinateur sur lequel est enregistré le programme d'ordinateur selon la revendication 14.
